# EUROPEAN PATENT APPLICATION

(11) **EP 4 703 939 A1**
(43) Date of publication of application: **04.03.2026**
(21) Application number: 25189386.3
(22) Date of filing: 14.07.2025
(51) Int. Cl.: G06F 21/60, G06F 21/64, G06F 21/72, G06F 21/44, G06F 15/78

(54) **CONFIDENTIAL COMPUTING SECURITY MANAGEMENT FOR A MULTI-CHIPLET, MULTI-ACCELERATOR SYSTEM-IN-PACKAGE**

(30) Priority: 30.08.2024 US 202418821607
(71) Applicant: Intel Corporation, Santa Clara, CA 95054 (US)
(72) Inventor: SOOD, Kapil, Washougal, 98671 (US); AHARON, Arie, Portland, 97229 (US); ALTMAN, Asher M., Bedford, 01730 (US); KRISHNA IYER, Venkidesh, Chandler, 85286 (US); KUPERMANN, Eli, 984507 Maale Adumim (IL); MONCLUS, Pere, Morgan Hill, 95037 (US); MOSUR, Lokpraveen Bhupathy, Gilbert, 85297 (US); MOYAL, Yanai, 9026503 Jerusalem (IL); ROSS, Nicholas G., Lake Forest, 92630 (US)
(74) Representative: Maiwald GmbH

(57) **Abstract**

Systems, apparatus, articles of manufacture, and methods are disclosed for confidential computing security management for a multi-chiplet, multi-accelerator system-in-package. An example multi-die System-In-Package (SiP) includes a first die including a circuit. Additionally, the example multi-die SiP includes a second die to authenticate the circuit to permit secure communication within the SiP.

## Description

### BACKGROUND

The electronics industry has moved towards more compact designs for integrated circuits. Electronics manufacturers have developed compact circuit designs such as a system on a chip (SoC) or a system in a package (SiP). SoCs and SiPs include most or all of the components of an electrical system. A SoC typically integrates components onto a single semiconductor die while a SiP typically includes multiple integrated circuits that are themselves integrated on a substrate within a carrier package. An integrated circuit used in a SiP includes a semiconductor die and is sometimes referred to as a tile or a chiplet.

### BRIEF DESCRIPTION OF THE DRAWINGS

FIG. 1 is a block diagram of an example system to provide confidential computing identity, authentication, and trust security for multiple accelerator circuits in a multi-die system in a package (SiP).
FIG. 2 is a block diagram illustrating example communication between the first example chiplet and the root of trust (RoT) device confidential computing (DCC) circuit of FIG. 1 to report measurements.
FIG. 3 is a block diagram illustrating example communication to establish a secure communication session between the trusted execution environment (TEE) security management (TSM) circuit of the core tile and the chiplet device security management (CDSM) circuit of the first chiplet of FIG. 1.
FIG. 4 is a block diagram illustrating additional example communication to establish a secure communication session between the TSM circuit of the core tile and the CDSM circuit of the first chiplet of FIG. 1.
FIG. 5 is a block diagram of an example implementation of the CDSM circuit and the RoT DCC circuit of FIG. 1.
FIG. 6 is a flowchart representative of example machine-readable instructions and/or example operations that may be executed, instantiated, and/or performed by example programmable circuitry to implement the TSM circuit of FIG. 1.
FIG. 7 is a flowchart representative of example machine-readable instructions and/or example operations that may be executed, instantiated, and/or performed by example programmable circuitry to implement the CDSM circuit of FIG. 1.
FIG. 8 is a flowchart representative of example machine-readable instructions and/or example operations that may be executed, instantiated, and/or performed by example programmable circuitry to implement the RoT DCC circuit of FIG. 1.
FIG. 9 is a block diagram of an example system in a package (SiP) including example fleet management system (FMS) circuit.
FIG. 10 is a graphical illustration depicting example availability of the FMS circuit depending on where the FMS circuit is implemented with respect to the SiP of FIG. 9.
FIG. 11 is a block diagram of an example system including the FMS circuit of FIG. 9.
FIG. 12 is a block diagram of an example implementation of the FMS circuit of FIG. 9.
FIG. 13 is a block diagram of an example SiP including the FMS circuit of FIG. 9 implemented in an example memory and input/output chiplet of the SiP.
FIG. 14 is a block diagram of an example SiP including the FMS circuit of FIG. 9 implemented in an example accelerator chiplet of the SiP.
FIG. 15 is a block diagram of an example system including the FMS circuit of FIG. 9 implemented external to an example SiP.
FIG. 16 is a block diagram of an example system including an example SiP with the FMS circuit of FIG. 9 implemented as a dedicated chiplet.
FIG. 17 is a block diagram illustrating example communication between the FMS circuit of FIG. 9 and a network in an example platform where an example SiP includes an example infrastructure processor unit (IPU) circuit integrated in the SiP.
FIG. 18 is a block diagram illustrating example communication between the FMS circuit of FIG. 9 and a network in an example platform where an example SiP includes an example network interface card (NIC) circuit integrated external to the SiP.
FIG. 19 is a block diagram of an example implementation of the FMS circuit of FIG. 9.
FIG. 20 is a flowchart representative of example machine-readable instructions and/or example operations that may be executed, instantiated, and/or performed by example programmable circuitry to implement the FMS circuit of FIG. 9 to identify and onboard with a remote fleet manager.
FIG. 21 is a flowchart representative of example machine-readable instructions and/or example operations that may be executed, instantiated, and/or performed by example programmable circuitry to implement the FMS circuit of FIG. 9 to perform fleet management.
FIG. 22 is a block diagram of an example processing platform including programmable circuitry structured to execute, instantiate, and/or perform the example machine-readable instructions and/or perform the example operations of FIGS. 6, 7, 8, 20, and/or 21 to implement the TSM circuit of FIGS. 1-5, the CDSM circuit of FIGS. 1-5, the RoT DCC circuit of FIGS. 1-5, and/or the FMS circuit of FIGS. 9-19.
FIG. 23 is a block diagram of an example implementation of the programmable circuitry of FIG. 22.
FIG. 24 is a block diagram of another example implementation of the programmable circuitry of FIG. 22.

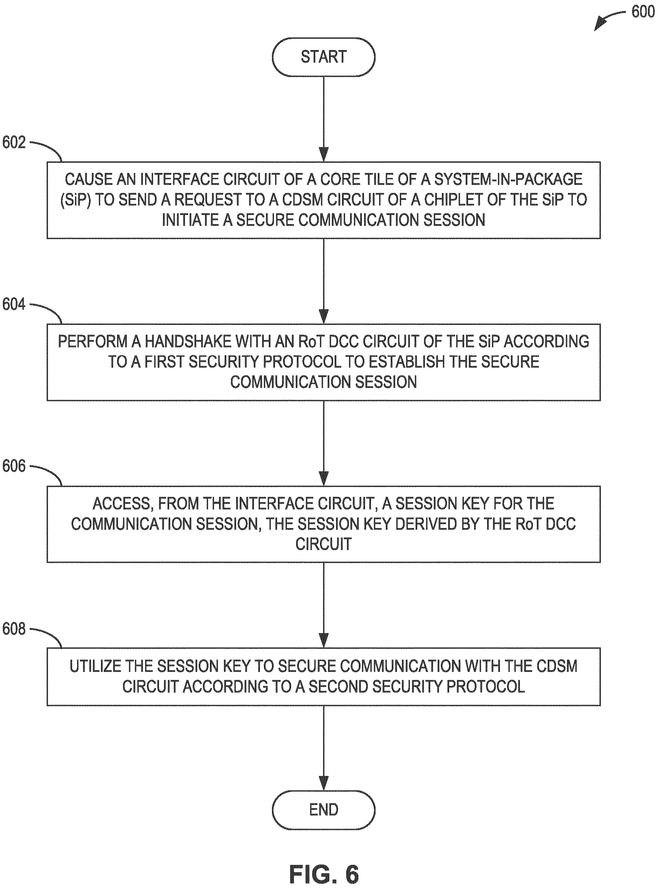

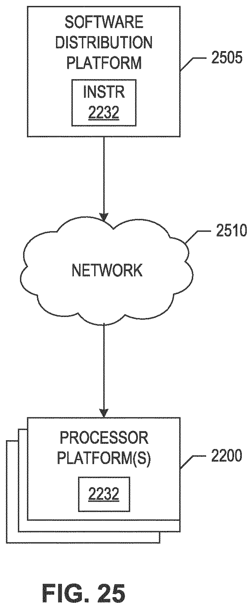

FIG. 25 is a block diagram of an example software/firmware/instructions distribution platform (e.g., one or more servers) to distribute software, instructions, and/or firmware (e.g., corresponding to the example machine-readable instructions of FIGS. 6, 7, 8, 20, and/or 21) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

SiPs typically include multiple integrated circuits (ICs) (e.g., dies, tiles, chiplets) that are collectively integrated within a same carrier package. In some examples, tiles, chiplets, and/or dies are modular ICs, and two or more such modular ICs may together form a SoC or SiP. In some examples, a chiplet is located in a package with one or more other chiplets. For example, the ICs are stacked using package on package mounting, placed side by side, and/or embedded in or on a substrate of the SiP. Package on package mounting includes coupling one or more leads of a first IC package to one or more leads of a second IC package to combine the first and second ICs vertically with respect to a substrate on which one of the first or second ICs is disposed. For example, the leads of the first and second ICs may be implemented by electrical pads that are interconnected via a ball grid array (BGA) or other surface mount technology (SMT).

SiPs can include multiple chiplets in the same package where each chiplet includes multiple accelerator circuits and each accelerator circuit operates as a root complex integrated endpoint device (RCiEP). For example, an RCiEP is a type of device defined by the Peripheral Component Interconnect (PCI) Express (PCIe) standard as an integrated device (e.g., integrated within a semiconductor package) that connects a central processor unit (CPU) and memory subsystem to a PCIe switch fabric including one or more PCIe or PCI devices. As such, accelerator circuits in a multi-chiplet-based SiP behave like PCIe devices from the perspective of software but are connected to a central processor unit (CPU) and/or other processor circuitry via one or more Universal Chiplet Interconnect (UCI) Express (UCIe) compliant physical connections. In some examples, physical connections between chiplets and dies (e.g., chiplet-to-chiplet interconnects, die-to-die interconnects, etc.) are compliant with other standards or specifications such as a Bunch of Wires (BoW) specification, a Cache Coherent Interconnect for Accelerators (CCIX) specification, a Advanced Interface Bus (AIB) standard, a 112 gigabit per second (Gbps) (112G) specification, or a Open high Bandwidth Interconnect (OpenHBI) specification, among others.

Additionally, chiplets in a multi-chiplet-based SiP may be interconnected using a Compute Express Link (CXL) protocol such as the CXL protocol for cache-coherent accesses to system memory (CXL.cache or CXL.$), the CXL protocol for device memory (CXL.Mem), or the CXL protocol for PCIe-based I/O devices (CXL.IO/PCIe). Example accelerator circuits include an artificial intelligence (AI) accelerator circuit, a graphics processor unit (GPU) accelerator circuit, a quick assist technology (QAT) accelerator circuit, a network interface card (NIC) accelerator circuit, a virtual radio access network (vRAN) accelerator circuit, a turbo intellectual property (IP) (TIP) accelerator circuit (e.g., for 5^{th} generation (5G) network encoding in a vRAN), an infrastructure processing unit (IPU) accelerator circuit, among others.

For example, a QAT accelerator circuit is circuitry that can perform cryptographic functions (e.g., encryption, decryption, etc.), compression, and/or decompression more efficiently than a general-purpose processor core. In some examples, a QAT accelerator circuit is used for encryption and/or decryption of network traffic in virtual private network (VPNs), load balancers, content delivery networks (CDNs), and web servers. Other example accelerator circuits are possible such as inference engine accelerator circuits, tensor processing unit (TPU) accelerator circuits, neural processing unit (NPU) accelerator circuits, AI kernel processor (AKP) accelerator circuits, 5G and/or 6^{th} generation (6G) network accelerator circuits, and input/output (I/O) accelerator circuits.

To ensure confidential computing between trusted software and accelerator circuits, the trusted software should verify the authenticity and/or identity of the accelerator circuits. Confidential computing standards define security protocols (e.g., security protocol and data model (SPDM), trusted execution environment (TEE) device interface security protocol (TDISP), etc.) to extend trust from a trusted virtual machine (VM) (e.g. provided by Trust Domain Extensions (TDX)) to one or more endpoint devices. However, confidential computing standards do not specify how to extend trust from a trusted VM to accelerator circuits and/or I/O devices in a multi-chiplet-based and/or tile-based SiP where accelerator circuits and/or I/O devices reside on different chiplets within the same package and operate as RCiEPs. As such, confidential data (e.g., data defining an AI model and/or data associated with an AI model) may not be protected in a SiP. Additionally, improved cryptographic techniques such as post-quantum cryptography (PQC) may require confidential computing.

To implement confidential computing (e.g., TDX-Connect) in a multi-chiplet-based, multi-accelerator-based device, a trusted VM (e.g., also referred to as a trust domain (TD)) should securely identify and authenticate accelerator circuits on a chiplet and establish a secure communication channel with a trusted entity on the chiplet before admitting one or more of the accelerator circuits into the trust boundary of the trusted VM. Advantageously, examples disclosed herein include an identity and authentication security architecture for pervasive and performant confidential computing for multi-chiplet, multi-accelerator circuit SiPs. Methods, apparatus, and articles of manufacture disclosed herein include a scalable and cost-effective chiplet identity and authentication security architecture that is extensible to third-party chiplets and compliant with industry standards. In some disclosed examples, a trusted VM views chiplets and one or more accelerator circuits of each chiplet with a consistent identity and authenticates the identifies of chiplets and/or accelerator circuits as described below via an on-package security authority. Accordingly, examples disclosed herein include an in-package security system.

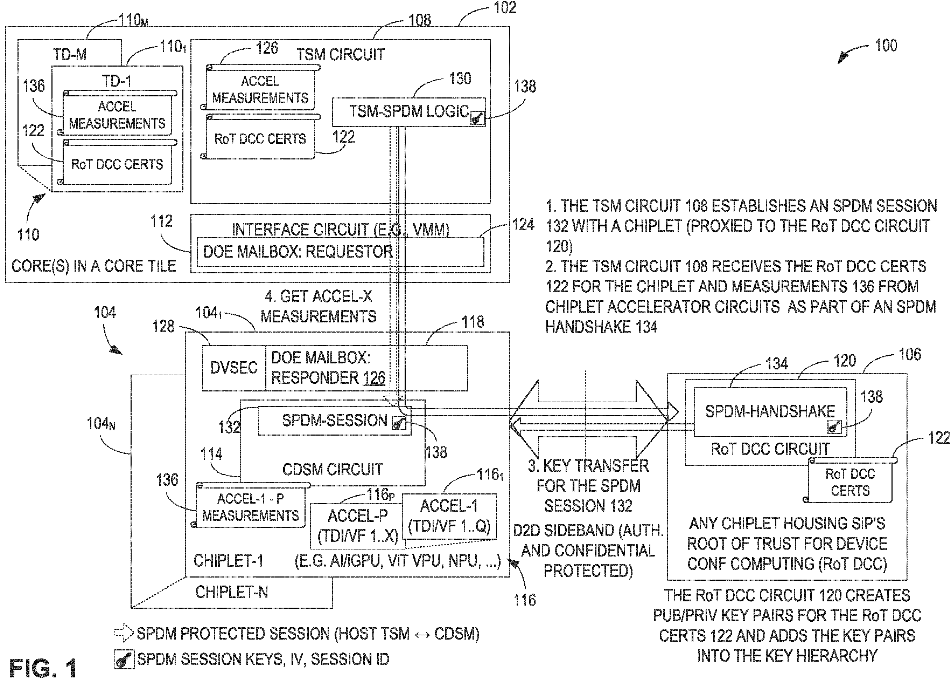

FIG. 1 is a block diagram of an example system 100 to provide confidential computing identity, authentication, and trust security for multiple accelerator circuits in a multi-die system in a package (SiP). For example, the system 100 (e.g., the identity, authentication, and key establishment system) of FIG. 1 depicts example components, example communication, and example security states of a SiP or a SoC including multiple disaggregated chiplets each hosting multiple accelerator circuits. In some examples, a SiP refers to a system-in-package. Additionally, examples disclosed herein can be integrated into any integrated accelerator circuit, whether (1) on a single, separate tile, (2) on an integrated memory and I/O tile, or (3) within a computational building block (CBB).

A CBB is one or more logic circuits that may be generic to the operation of an accelerator circuit and/or specific to the operation of an accelerator circuit. For example, a generic CBB may be memory, a memory management unit, a controller, and/or a scheduler. Additionally, for example, in an accelerator circuit that implements a vision processor unit (VPU) accelerator circuit, a specific CBB may be a convolutional neural network, a recurrent neural network, and/or a digital signal processor (DSP). Additionally or alternatively, in an accelerator circuit that implements a GPU, a specific CBB may be a thread dispatcher, a graphics technology interface, and/or any other CBB that is desirable to improve the processing speed and overall performance of processing computer graphics and/or image processing. In some examples, in an accelerator circuit that implements a field programmable gate array (FPGA), a specific CBB may be an arithmetic logic unit (ALU) and/or any other CBB that is desirable to improve the processing speed and overall performance of processing general computations.

In the illustrated example of FIG. 1, the system 100 includes an example core tile 102, one or more example chiplets 104, and an example root of trust (RoT) chiplet 106. In the example of FIG. 1, the core tile 102 includes an example trusted execution environment (TEE) security management (TSM) circuit 108 and one or more example cores 110. For example, the one or more cores 110 includes a first example core 110₁ through an *M*th example core 110_{M}.

In the illustrated example of FIG. 1, each instance of the one or more cores 110 is implemented by a core processor circuit. For example, each instance of the one or more cores 110 implements a trusted VM or TD (e.g., TD-1 through TD-M). In some examples, instead of a VM at least one of the one or more cores 110 implements container or other virtualized execution environment could be used in any example described herein. In the example of FIG. 1, the core tile 102 also includes a first example interface circuit 112. For example, the first interface circuit 112 implements a virtual machine monitor (VMM) such as a hypervisor. In the example of FIG. 1, the first interface circuit 112 can be implemented by software, hardware, and/or firmware.

In the illustrated example of FIG. 1, the one or more chiplets 104 include a first example chiplet 104₁ through an Nth example chiplet 104_{N}. Additionally, each of the one or more chiplets 104 includes example a chiplet device security management (CDSM) circuit 114, one or more accelerator circuits 116, and a second example interface circuit 118. In the example of FIG. 1, the one or more accelerator circuits 116 include a first example accelerator circuit 116₁ through a *P*th example accelerator circuit 116_{P}. In the example of FIG. 1, one or more of the one or more accelerator circuits 116 is implemented by an AI accelerator circuit, a GPU accelerator circuit, a QAT accelerator circuit, a NIC accelerator circuit, a vRAN accelerator circuit, a TIP accelerator circuit, an IPU accelerator circuit, a TPU accelerator circuit, an NPU accelerator circuit, an AKP accelerator circuit, a 5G network accelerator circuit, a 6G network accelerator circuit, and/or an I/O accelerator circuit, among others.

In the illustrated example of FIG. 1, the RoT chiplet 106 includes an example root of trust (RoT) device confidential computing (DCC) circuit 120. In some examples, the RoT DCC circuit 120 is referred to as a SiP security circuit. In the example of FIG. 1, the RoT chiplet 106 can be any chiplet housing the RoT DCC circuit 120. For example, the RoT chiplet 106 can be an integrated memory and I/O chiplet of the system 100. In some examples, the RoT chiplet 106 can be the core tile 102. In the example of FIG. 1, the RoT DCC circuit 120 is in communication with the one or more chiplets 104 via at least one device-to-device (D2D) sideband channel. For example, the at least one D2D sideband channel is authenticated and confidential protected.

In the illustrated example of FIG. 1, the CDSM circuit 114 is implemented by at least one programmable processor circuit and/or at least one logic circuit. In the example of FIG. 1, the CDSM circuit 114 is a security engine that acts as a device security manager (DSM) or DSM circuit for the chiplet on which the CDSM circuit 114 is implemented. For example, each of the one or more chiplets 104 includes an instance of the CDSM circuit 114 that acts as a centralized security entity on behalf of the one or more accelerator circuits 116.

In the illustrated example of FIG. 1, the TSM circuit 108 is implemented by one or more processor cores. In the example of FIG. 1, the TSM circuit 108 is an authenticating security entity that establishes (e.g., explicitly establishes) trust and a secure communication session between the one or more cores 110 and one or more accelerator circuits that operate as an RCiEP, regardless of the tile and/or chiplet on which the one or more accelerator circuits reside. Additionally, the TSM circuit 108 is an authenticating security entity that establishes (e.g., explicitly establishes) trust and a secure communication session between the one or more cores 110 and one or more accelerator circuits regardless of the physical communication channel (e.g., CXL.Cache, CXL.IO/PCIe, UCIe, etc.) via which the core tile 102 communicates with the one or more accelerator circuits 116.

In the illustrated example of FIG. 1, the RoT DCC circuit 120 operates as a single logical RoT for the system 100. An RoT is hardware (HW), software (SW), and/or firmware (FW) that provides one or more secure functions for establishing security on a device. In the example of FIG. 1, the RoT DCC circuit 120 creates an identity (ID) for each of the one or more chiplets 104 and respective ones of the one or more accelerator circuits 116. Additionally, the RoT DCC circuit 120 manages the lifecycle of identities.

In the illustrated example of FIG. 1, the identities of the one or more chiplets 104 and the one or more accelerator circuits 116 of respective ones of the one or more chiplets 104 are implemented by example root of trusted (RoT) device confidential computing (DCC) certificates 122 (e.g., at least one identifier certificate). For example, the RoT DCC certificates 122 are Trusted Computing Group (TCG) Device Identifier Composition Engine (DICE) certificates. A DICE certificate provides a hardware-based identity (e.g., a unique cryptographic identity). In the example of FIG. 1, the RoT DCC circuit 120 creates a public, private key pair for each of the RoT DCC certificates 122 and adds the key pairs into a key hierarchy (e.g., a DICE key hierarchy) for the system 100.

In the illustrated example of FIG. 1, the RoT DCC circuit 120 also performs authentication security protocols (e.g., SPDM) to allow the TSM circuit 108 to authenticate one or more accelerator circuits and vice versa. As such, the result of security protocols performed by the RoT DCC circuit 120 is a secure communication session that is unique for each chiplet and each accelerator circuit within a chiplet. Accordingly, multiple accelerator circuits, which could be situated across multiple chiplets, can establish and use a confidential communication session with the TSM circuit 108. Thus, even if the system 100 includes a third-party untrusted chiplet or other third-party untrusted circuit, communication between the TSM circuit 108 and an accelerator circuit remains protected. Additionally, interactions between components of the system 100 that occur for purposes of traffic access control over CXL.Cache data lanes and/or over CXL.IO/PCIe data lanes remain secure.

In the illustrated example of FIG. 1, the first interface circuit 112 implements an example data object exchange (DOE) mailbox requestor 124. Additionally, the second interface circuit 118 implements an example DOE mailbox responder 126 and example designated vendor-specific extended capability (DVSEC) registers 128. In the example of FIG. 1, the DOE mailbox requestor 124 and the DOE mailbox responder 126 are mailboxes used for communication between the TSM circuit 108 and the one or more chiplets 104.

In the illustrated example of FIG. 1, the DVSEC registers 128 implement capabilities to implement TDX-Connect. For example, the DVSEC registers 128 include a capability register, control registers, a TEE mode enable/disable for each virtual function (VF) supported by respective ones of the one or more chiplets 104, measurement registers for respective ones of the one or more chiplets 104, and mailbox registers. In the example of FIG. 1, at least one VF can be enabled for a trusted device mode (e.g., TEE Device Interface).

In example operation, an example TSM SPDM logic circuit 130 of the TSM circuit 108 establishes, on behalf of one of the one or more cores 110, an example SPDM session 132 with at least one of the one or more accelerator circuits 116 of the first chiplet 104₁. In the example of FIG. 1, the CDSM circuit 114 acts as a proxy (e.g., forward communications) between the TSM SPDM logic circuit 130 and the RoT DCC circuit 120 to perform an example SPDM handshake 134. For example, the communications proxied between the TSM SPDM logic circuit 130 and the RoT DCC circuit 120 are related to identity and authentication of the CDSM circuit 114.

For example, the TSM SPDM logic circuit 130 identifies, to the RoT DCC circuit 120, at least one of the one more accelerator circuits 116 with which the TSM circuit 108 is attempting to establish a secure communication session. In the example of FIG. 1, the RoT DCC circuit 120 verifies that the at least one of the one more accelerator circuits 116 with which the TSM circuit 108 is attempting to establish a secure communication session matches an identity in the RoT DCC certificates 122. Based on the RoT DCC circuit 120 verifying that the at least one of the one more accelerator circuits 116 matches an identity in the RoT DCC certificates 122, the RoT DCC circuit 120 provides a certificate (e.g., an RoT DCC certificate) with an embedded public key to the TSM SPDM logic circuit 130 (e.g., the TSM circuit 108). Additionally, after performing the SPDM handshake 134, the TSM SPDM logic circuit 130 receives the RoT DCC certificates 122 for the CDSM circuit 114 as well as example measurements 136 for the one or more accelerator circuits 116 of the first chiplet 104₁.

In some examples, the TSM SPDM logic circuit 130 can retrieve the measurements 136 from the CDSM circuit 114 after the SPDM handshake 134. For example, the TSM SPDM logic circuit 130 can request the measurements 136 from the CDSM circuit 114 using SPDM commands. In example operation, after completing the SPDM handshake 134, the RoT DCC circuit 120 performs a key exchange or key establishment process with the CDSM circuit 114 to derive an example session key 138 for the SPDM session 132.

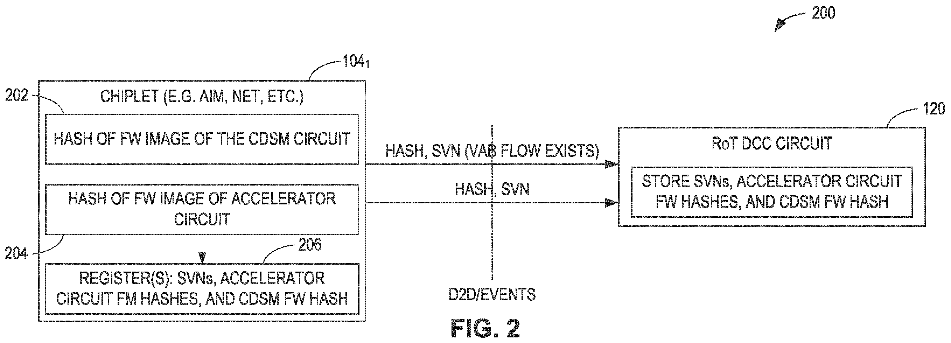

In example operation, after key transfer for the SPDM session 132, the TSM SPDM logic circuit 130 can get the measurements 136 from the one or more accelerator circuits 116. Additional detail regarding measurements is described in FIG. 2. For example, FIG. 2 is a block diagram illustrating example communication 200 between the first example chiplet 104₁ and the RoT DCC circuit 120 of FIG. 1 to report measurements. As described above, the RoT DCC circuit 120 creates and authorizes the RoT DCC certificates 122 on behalf of the one or more chiplets 104 and respective ones of the one or more accelerator circuits 116 of the one or more chiplets 104. For example, the RoT DCC circuit 120 securely generates unique identities for the one or more chiplets 104, securely stores and manages the identities along with public, private key pairs for each of the identities, and manages (e.g., revokes and/or refreshes) identities, as needed.

In the illustrated example of FIG. 2, the CDSM circuit 114 authenticates firmware of the CDSM circuit 114. For example, the CDSM circuit 114 accesses a firmware image of the CDSM circuit 114 from read-only memory (ROM) of the CDSM circuit 114. In the example of FIG. 2, the CDSM circuit 114 generates a first example hash 202 of the firmware image of the CDSM circuit 114. Additionally, the one or more accelerator circuits 116 authenticate firmware of the one or more accelerator circuits 116. For example, the one or more accelerator circuits 116 access one or more respective firmware images of the one or more accelerator circuits 116 from ROM of the one or more accelerator circuits 116. Additionally, the one or more accelerator circuits 116 generate one or more second example hashes 204 of the one or more respective firmware images of the one or more accelerator circuits 116.

In the illustrated example of FIG. 2, one or more example registers 206 of the first chiplet 104₁ stores the first hash 202, the one or more second hashes 204, and security version numbers (SVNs) of CDSM circuit 114 and the one or more accelerator circuits 116. In the example of FIG. 2, measurement reporting from accelerator circuits of various chiplets allows the RoT DCC circuit 120 to maintain up-to-date measurements and/or security versions of accelerator circuits of the system 100. As such, the RoT DCC circuit 120 can use the first hash 202, the one or more second hashes 204, and/or the SVNs as part of the key establishment protocols (e.g. SPDM).

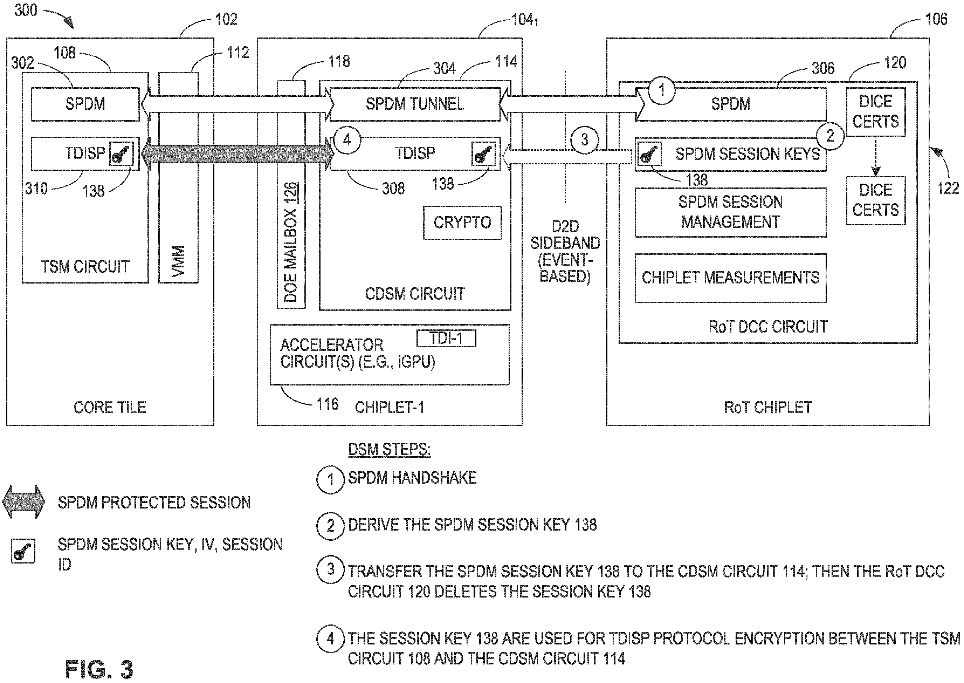

FIG. 3 is a block diagram illustrating example communication 300 to establish a secure communication session between the TSM circuit 108 of the core tile 102 and the CDSM circuit 114 of the first chiplet 104₁ of FIG. 1. In the example of FIG. 3, the CDSM circuit 114 and the RoT DCC circuit 120 are mutually authenticated (e.g., by construction) and share a protected sideband channel. Additionally, the RoT DCC circuit 120 has previously acquired firmware measurements and security version numbers (SVNs) from the one or more accelerator circuits 116.

In the illustrated example of FIG. 3, the RoT DCC circuit 120 has previously created a unique identifier and unique per-chiplet public, private key pair for the CDSM circuit 114. For example, the RoT DCC circuit 120 generates the identifiers (IDs) as the RoT DCC certificates 122 for the CDSM circuit 114 and the one or more accelerator circuits 116 of the first chiplet 104₁. Additionally, the RoT DCC circuit 120 derives the public, private key pair for the CDSM circuit 114 and the one or more accelerator circuits 116. In the example of FIG. 3, the RoT DCC circuit 120 signs the public, private key pairs into the platform root certification keys (e.g., of the system 100 of FIG. 1). For example, the platform root certification keys are derived as per the TCG DICE standard. A similar key hierarchy is performed in TDX, Software Guard Extensions (SGX), and CPU RoT attestation.

In the illustrated example of FIG. 3, the TSM circuit 108 initiates an SPDM handshake (e.g., the SPDM handshake 134) with the CDSM circuit 114 on behalf of the one or more cores 110. For example, the TSM circuit 108 initiates an SPDM handshake with the CDSM circuit 114 via the DOE mailbox requestor 124 and the DOE mailbox responder 126. In the example of FIG. 3, a first example SPDM logic circuit 302 of the TSM circuit 108 (e.g., the TSM SPDM logic circuit 130 of FIG. 1) transmits a request to form a secure communication session, from at least one of the one or more cores 110, to the CDSM circuit 114. In the example of FIG. 3, the CDSM circuit 114 reads incoming messages from the TSM circuit 108 and detects that the incoming messages are SPDM messages. Additionally, the CDSM circuit 114 places a specific (e.g., proprietary) header on the SPDM messages and transfers the SPDM messages to the RoT DCC circuit 120.

In the illustrated example of FIG. 3, the RoT DCC circuit 120 acts as a termination endpoint for the SPDM handshake and processes the SPDM exchange between the TSM circuit 108 and the CDSM circuit 114. For example, the RoT DCC circuit 120 prepares SPDM responses and sends the SPDM responses to the CDSM circuit 114. Based on receiving the SPDM response, the CDSM circuit 114 sends the SPDM responses to the TSM circuit 108 via the DOE mailbox responder 126 and the DOE mailbox requestor 124. As such, the CDSM circuit 114 acts like a "proxy" for the SPDM handshake providing an example SPDM tunnel 304 between the first SPDM logic circuit 302 and a second example SPDM logic circuit 306 of the RoT DCC circuit 120.

In the illustrated example of FIG. 3, on completion of the SPDM handshake, the TSM circuit 108 and the RoT DCC circuit 120 perform a key exchange or a key establishment operation. For example, the RoT DCC circuit 120 derives the session key 138 for the secure communication session between the TSM circuit 108 and the CDSM circuit 114. In the example of FIG. 3, the RoT DCC circuit 120 delivers the session key 138 to the CDSM circuit 114. For example, the RoT DCC circuit 120 transfers the session key 138 to first example TDISP logic circuit 308 of the CDSM circuit 114. Additionally, the RoT DCC circuit 120 deletes the session key 138 from the RoT DCC circuit 120.

In the illustrated example of FIG. 3, the RoT DCC circuit 120 also maintains a session context for the secure communication session. For example, a session context, also referred to as session record, is a record of the SPDM session (e.g., secure communication session) between the TSM circuit 108 and at least one of the one or more accelerator circuits 116 (e.g., via the CDSM circuit 114). As such, the RoT DCC circuit 120 maintains a record of secure communication sessions between the TSM circuit 108 and the one or more chiplets 104.

As such, the TSM circuit 108 and the RoT DCC circuit 120 both have unique keys for confidential and integrity protected communications. From this points onwards, communication between the TSM circuit 108 and the CDSM circuit 114 is protected by the session key 138 which is now terminated at the CDSM circuit 114. For example, the first TDISP logic circuit 308 and second example TDISP logic circuit 310 of the TSM circuit 108 utilize the session key 138 for TDISP protocol encryption. As such, there is an SPDM protected communication session between the TSM circuit 108 and the CDSM circuit 114. As described above, the SPDM handshake is a two-party exchange resulting in mutually confident keys for subsequent encrypted TDISP exchange. Additionally, after the SPDM handshake, the RoT DCC circuit 120 continues to monitor the SPDM session and intervenes in the SPDM session for exception events.

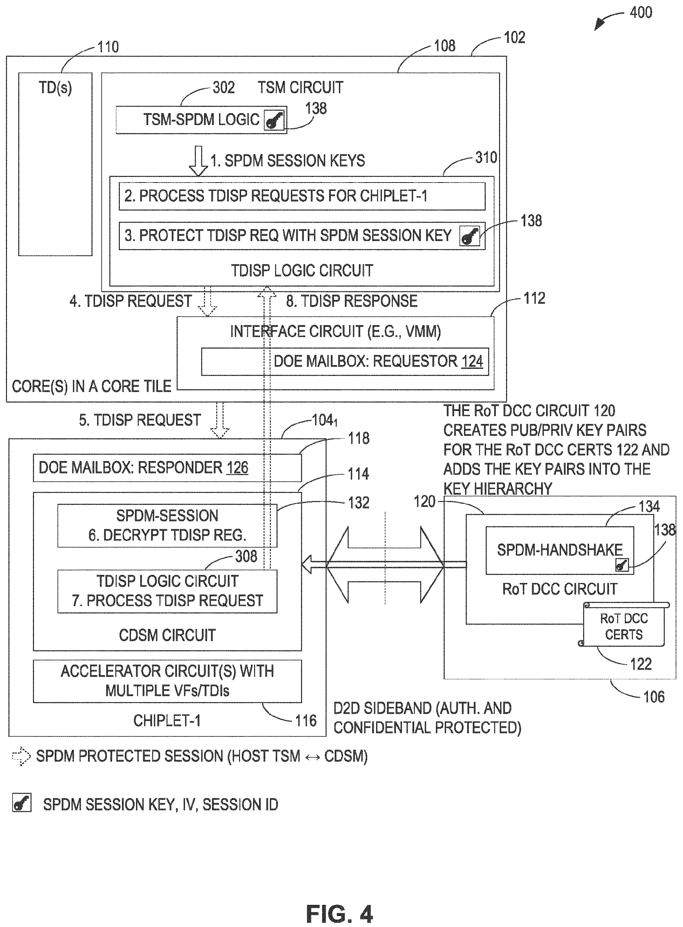

FIG. 4 is a block diagram illustrating additional example communication 400 to establish a secure communication session between the TSM circuit 108 of the core tile 102 and the CDSM circuit 114 of the first chiplet 104₁ of FIG. 1. In the example of FIG. 4, the CDSM circuit 114 reads SPDM messages from the DOE mailbox responder 126 and firmware of the CDSM circuit 114 performs processing actions, including transporting the SPDM messages to the RoT DCC circuit 120 as described above. Additionally, as described above, communication between the CDSM circuit 114 and the RoT DCC circuit 120 occurs over a secure sideband interface such UCIe industry standard protocols. In some examples, the CDSM circuit 114 communicates with the RoT DCC circuit 120 using a vendor-specific protocol such as events and mailboxes over a secure sideband channel.

In the illustrated example of FIG. 4, the first SPDM logic circuit 302 sends the session key 138 (e.g., SPDM session key) to the second TDISP logic circuit 310. In the example of FIG. 4, the second TDISP logic circuit 310 processes one or more TDISP requests for the first chiplet 104₁ and encrypts the one or more TDISP requests with the session key 138 to protect the one or more TDISP requests. Additionally, the second TDISP logic circuit 310 forwards the one or more encrypted TDISP requests to the DOE mailbox requestor 124 which transmits the one or more encrypted TDISP requests to the DOE mailbox responder 126.

In the illustrated example of FIG. 4, within the SPDM session 132, the CDSM circuit 114 decrypts the one or more encrypted TDISP requests using the session key 138. Additionally, the first TDISP logic circuit 308 processes the one or more TDISP requests. Based on processing the one or more TDISP requests, the first TDISP logic circuit 308 provides one or more TDISP responses to the second TDISP logic circuit 310 via the DOE mailbox responder 126 and the DOE mailbox requestor 124.

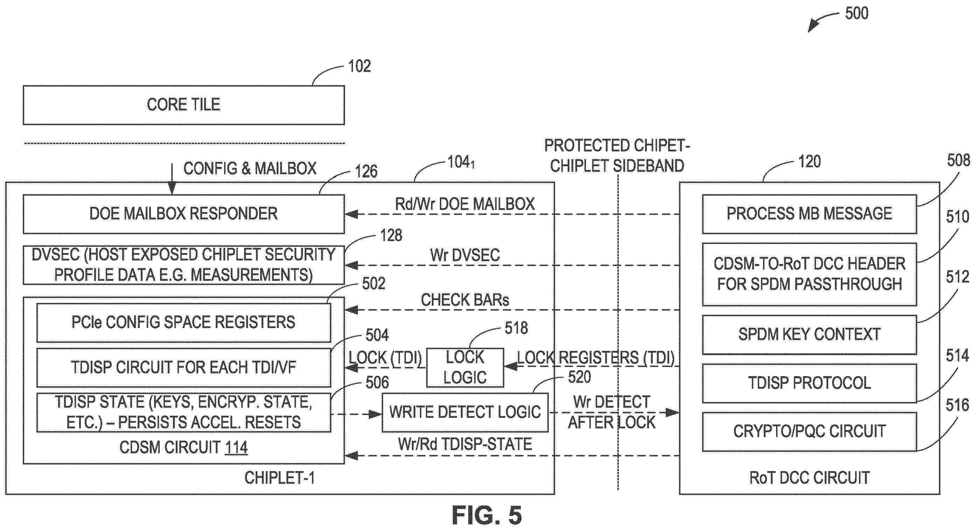

FIG. 5 is a block diagram of an example implementation of the CDSM circuit 114 and the RoT DCC circuit 120 of FIG. 1. In the example of FIG. 5, the CDSM circuit 114 includes example PCIe configuration space registers 502, an example TDISP circuit 504 (e.g., one or more state machine circuits) for each TDI and/or VF supported by the one or more accelerator circuits 116, and example TDISP state memory 506. For example, the TDISP state memory 506 includes one or more keys, an encryption state, among other data and persists upon accelerator circuit reset.

In the illustrated example of FIG. 5, the RoT DCC circuit 120 includes an example process main band (MB) message 508 and an example CDSM-to-RoT DCC header 510 for SPDM passthrough (e.g., to facilitate the SPDM tunnel 304). Additionally, the RoT DCC circuit 120 includes an example SPDM key context (e.g., the session key 138) and an example TDISP protocol 514. In the example of FIG. 5, the RoT DCC circuit 120 also includes one or more example cryptographic circuits 516 (e.g., a PQC circuit).

In the illustrated example of FIG. 5, the RoT DCC circuit 120 can read and/or write to the DOE mailbox responder 126. Additionally, the RoT DCC circuit 120 can write to the DVSEC registers 128. In the example of FIG. 5, the RoT DCC circuit 120 can check base address registers of the CDSM circuit 114. Additionally, the RoT DCC circuit 120 can lock one or more TDI registers of the TDISP circuit 504 via an example lock logic circuit 518 of the first chiplet 104₁. In the example of FIG. 5, the RoT DCC circuit 120 can also detect when the TDISP state memory 506 has been written to after a lock via an example write detect logic circuit 520 of the first chiplet 104₁. The example RoT DCC circuit 120 of FIG. 5 can also read and/or write to the TDISP state memory 506.

The TSM circuit 108, CDSM circuit 114, and/or the RoT DCC circuit 120 of FIGS. 1-5 may be instantiated (e.g., creating an instance of, bring into being for any length of time, materialize, implement, etc.) by programmable circuitry such as a Central Processor Unit (CPU) executing first instructions. Additionally or alternatively, the TSM circuit 108, CDSM circuit 114, and/or the RoT DCC circuit 120 of FIGS. 1-5 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIGS. 1-5 may, thus, be instantiated at the same or different times. Some or all of the circuitry of FIGS. 1-5 may be instantiated, for example, in one or more threads executing concurrently on hardware and/or in series on hardware. Moreover, in some examples, some or all of the circuitry of FIGS. 1-5 may be implemented by microprocessor circuitry executing instructions and/or FPGA circuitry performing operations to implement one or more virtual machines and/or containers.

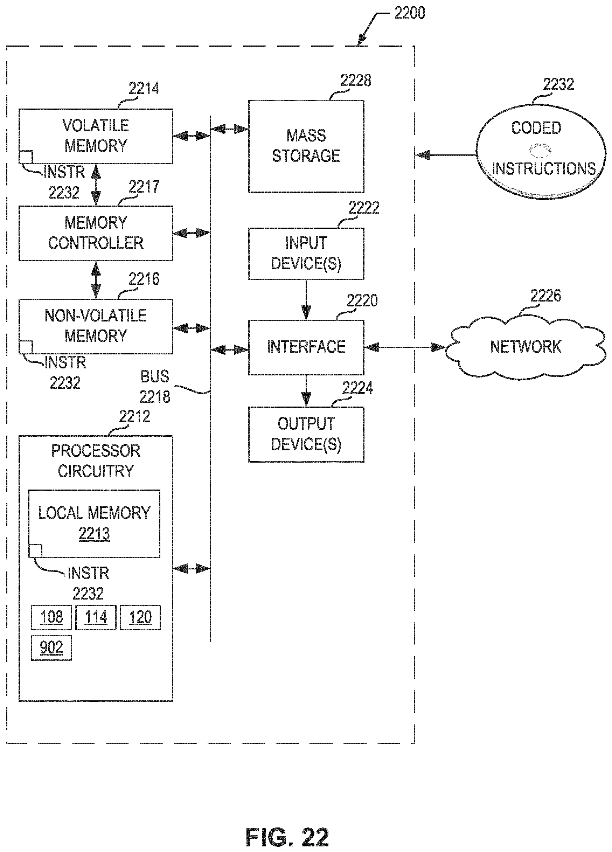

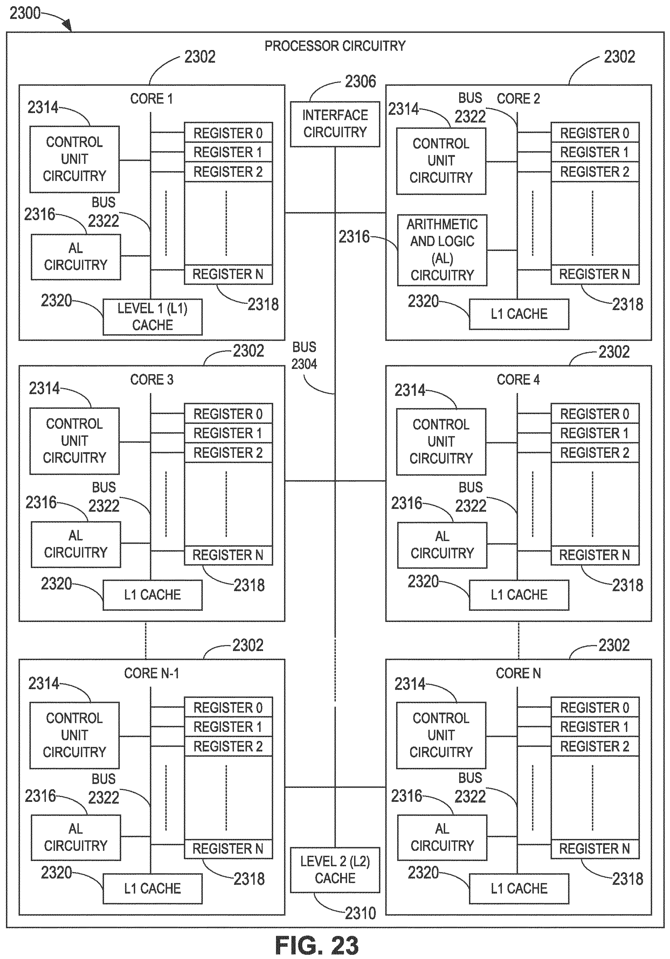

In some examples, the first SPDM logic circuit 302 of FIG. 3 is instantiated by programmable circuitry executing SPDM instructions and/or configured to perform operations such as those represented by the flowchart(s) of FIG. 6. In some examples, the TSM circuit 108 includes means for implementing a first security protocol. For example, the means for implementing may be implemented by the first SPDM logic circuit 302. In some examples, the first SPDM logic circuit 302 may be instantiated by programmable circuitry such as the example programmable circuitry 2212 of FIG. 22. For instance, the first SPDM logic circuit 302 may be instantiated by the example microprocessor 2300 of FIG. 23 executing machine-executable instructions such as those implemented by at least blocks 602, 604, and 606 of FIG. 6.

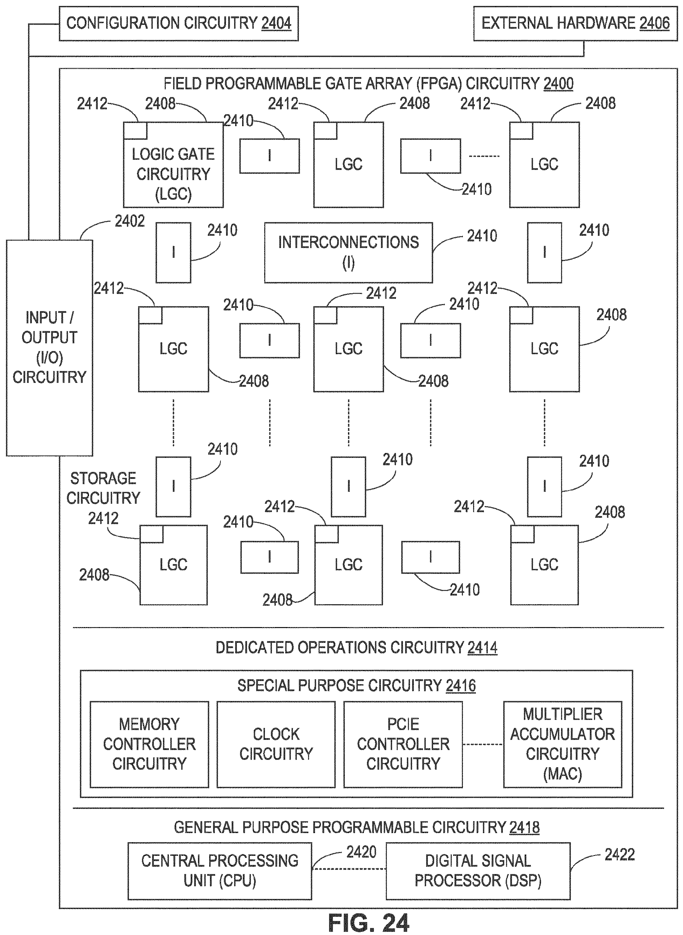

In some examples, the first SPDM logic circuit 302 may be instantiated by hardware logic circuitry, which may be implemented by an ASIC, XPU, or the FPGA circuitry 2400 of FIG. 24 configured and/or structured to perform operations corresponding to the machine-readable instructions. Additionally or alternatively, the first SPDM logic circuit 302 may be instantiated by any other combination of hardware, software, and/or firmware. For example, the first SPDM logic circuit 302 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

In some examples, the second TDISP logic circuit 310 is instantiated by programmable circuitry executing TDISP instructions and/or configured to perform operations such as those represented by the flowchart(s) of FIG. 6. In some examples, the TSM circuit 108 includes means for implementing a second security protocol. For example, the means for implementing may be implemented by the second TDISP logic circuit 310. In some examples, the second TDISP logic circuit 310 may be instantiated by programmable circuitry such as the example programmable circuitry 2212 of FIG. 22. For instance, the second TDISP logic circuit 310 may be instantiated by the example microprocessor 2300 of FIG. 23 executing machine-executable instructions such as those implemented by at least block 608 of FIG. 6.

In some examples, the second TDISP logic circuit 310 may be instantiated by hardware logic circuitry, which may be implemented by an ASIC, XPU, or the FPGA circuitry 2400 of FIG. 24 configured and/or structured to perform operations corresponding to the machine-readable instructions. Additionally or alternatively, the second TDISP logic circuit 310 may be instantiated by any other combination of hardware, software, and/or firmware. For example, the second TDISP logic circuit 310 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

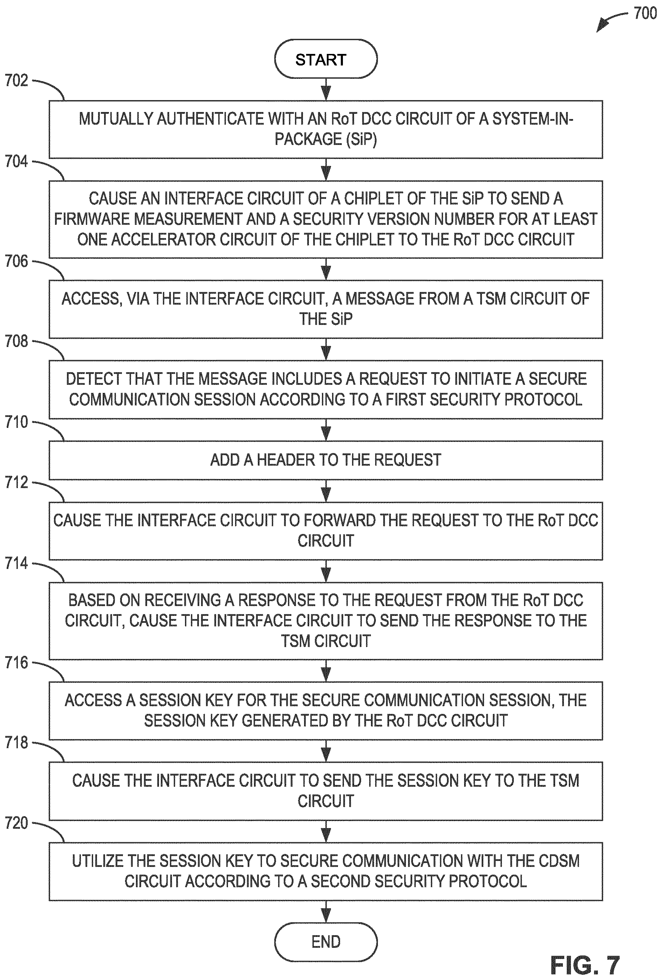

In some examples, the SPDM tunnel 304 is instantiated by programmable circuitry executing SPDM instructions and/or configured to perform operations such as those represented by the flowchart(s) of FIG. 7. In some examples, the CDSM circuit 114 includes means for implementing a first security protocol. For example, the means for implementing may be implemented by the SPDM tunnel 304. In some examples, the SPDM tunnel 304 may be instantiated by programmable circuitry such as the example programmable circuitry 2212 of FIG. 22. For instance, the SPDM tunnel 304 may be instantiated by the example microprocessor 2300 of FIG. 23 executing machine-executable instructions such as those implemented by at least blocks 702, 704, 706, 708, 710, 712, 714, 716, and 718 of FIG. 7.

In some examples, the SPDM tunnel 304 may be instantiated by hardware logic circuitry, which may be implemented by an ASIC, XPU, or the FPGA circuitry 2400 of FIG. 24 configured and/or structured to perform operations corresponding to the machine-readable instructions. Additionally or alternatively, the SPDM tunnel 304 may be instantiated by any other combination of hardware, software, and/or firmware. For example, the SPDM tunnel 304 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

In some examples, the first TDISP logic circuit 308 is instantiated by programmable circuitry executing TDISP instructions and/or configured to perform operations such as those represented by the flowchart(s) of FIG. 7. In some examples, the CDSM circuit 114 includes means for implementing a second security protocol. For example, the means for implementing may be implemented by the first TDISP logic circuit 308. In some examples, the first TDISP logic circuit 308 may be instantiated by programmable circuitry such as the example programmable circuitry 2212 of FIG. 22. For instance, the first TDISP logic circuit 308 may be instantiated by the example microprocessor 2300 of FIG. 23 executing machine-executable instructions such as those implemented by at least block 720 of FIG. 7.

In some examples, the first TDISP logic circuit 308 may be instantiated by hardware logic circuitry, which may be implemented by an ASIC, XPU, or the FPGA circuitry 2400 of FIG. 24 configured and/or structured to perform operations corresponding to the machine-readable instructions. Additionally or alternatively, the first TDISP logic circuit 308 may be instantiated by any other combination of hardware, software, and/or firmware. For example, the first TDISP logic circuit 308 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

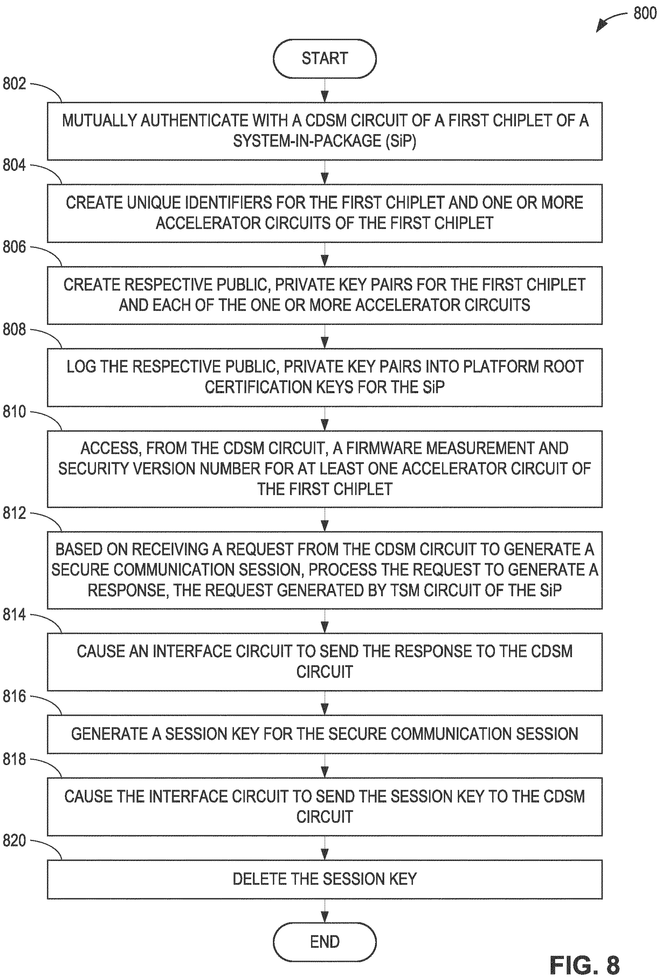

In some examples, the second SPDM logic circuit 306 is instantiated by programmable circuitry executing SPDM instructions and/or configured to perform operations such as those represented by the flowchart(s) of FIG. 8. In some examples, the RoT DCC circuit 120 includes means for implementing a first security protocol. For example, the means for implementing may be implemented by the second SPDM logic circuit 306. In some examples, the second SPDM logic circuit 306 may be instantiated by programmable circuitry such as the example programmable circuitry 2212 of FIG. 22. For instance, the second SPDM logic circuit 306 may be instantiated by the example microprocessor 2300 of FIG. 23 executing machine-executable instructions such as those implemented by at least blocks 802, 804, 806, 808, 810, 812, 814, 816, 818, and 820 of FIG. 8.

In some examples, the second SPDM logic circuit 306 may be instantiated by hardware logic circuitry, which may be implemented by an ASIC, XPU, or the FPGA circuitry 2400 of FIG. 24 configured and/or structured to perform operations corresponding to the machine-readable instructions. Additionally or alternatively, the second SPDM logic circuit 306 may be instantiated by any other combination of hardware, software, and/or firmware. For example, the second SPDM logic circuit 306 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

While an example manner of implementing the TSM circuit 108, the CDSM circuit 114, and the RoT DCC circuit 120 is illustrated in FIGS. 1-5, one or more of the elements, processes, and/or devices illustrated in FIGS. 1-5 may be combined, divided, re-arranged, omitted, eliminated, and/or implemented in any other way. Further, the example TSM circuit 108, the example CDSM circuit 114, and/or the example RoT DCC circuit 120 of FIGS. 1-5, may be implemented by hardware alone or by hardware in combination with software and/or firmware. Thus, for example, any of the example TSM circuit 108, the example CDSM circuit 114, and/or the example RoT DCC circuit 120, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example TSM circuit 108, the example CDSM circuit 114, and/or the example RoT DCC circuit 120 may include one or more elements, processes, and/or devices in addition to, or instead of, those illustrated in FIGS. 1-5, and/or may include more than one of any or all of the illustrated elements, processes and devices.

Flowchart(s) representative of example machine-readable instructions, which may be executed by programmable circuitry to implement and/or instantiate the example TSM circuit 108, the example CDSM circuit 114, and the example RoT DCC circuit 120 of FIGS. 1-5 and/or representative of example operations which may be performed by programmable circuitry to implement and/or instantiate the example TSM circuit 108, the example CDSM circuit 114, and the example RoT DCC circuit 120 of FIGS. 1-5, are shown in FIGS. 6, 7, and 8. The machine-readable instructions may be one or more executable programs or portion(s) of one or more executable programs for execution by programmable circuitry such as the programmable circuitry 2212 shown in the example programmable circuitry platform 2200 discussed below in connection with FIG. 22 and/or may be one or more function(s) or portion(s) of functions to be performed by the example programmable circuitry (e.g., an FPGA) discussed below in connection with FIGS. 23 and/or 24. In some examples, the machine-readable instructions cause an operation, a task, etc., to be carried out and/or performed in an automated manner in the real world. As used herein, "automated" means without human involvement.

FIG. 6 is a flowchart representative of example machine-readable instructions and/or example operations 600 that may be executed, instantiated, and/or performed by example programmable circuitry to implement the TSM circuit 108 of FIG. 1. The machine-readable instructions and/or the operations 600 begin at block 602, at which the TSM circuit 108 causes the first interface circuit 112 of the core tile 102 to send a request to the CDSM circuit 114 of the first chiplet 104₁ to initiate a secure communication session. For example, the request is an SPDM handshake request.

In the illustrated example of FIG. 6, at block 604, the TSM circuit 108 performs a handshake with the RoT DCC circuit 120 according to a first security protocol (e.g., SPDM) to establish the secure communication session. In the example of FIG. 6, at block 606, on completion of the handshake, the TSM circuit 108 accesses, from the first interface circuit 112, a session key for the secure communication session. For example, the session key is derived by the RoT DCC circuit 120. At block 608, the TSM circuit 108 utilizes the session key to secure (e.g., encrypt, decrypt, etc.) communication with the CDSM circuit 114 according to a second security protocol (e.g., TDISP).

FIG. 7 is a flowchart representative of example machine-readable instructions and/or example operations 700 that may be executed, instantiated, and/or performed by example programmable circuitry to implement the CDSM circuit 114 of FIG. 1. The machine-readable instructions and/or the operations 700 begin at block 702 at which the CDSM circuit 114 of the first chiplet 104₁ of a SiP (e.g., the system 100) mutually authenticates with the RoT DCC circuit 120 of the SiP. At block 704, the CDSM circuit 114 causes the second interface circuit 118 of the first chiplet 104₁ to send a firmware measurement and a security version number for at least one accelerator circuit of the first chiplet 104₁ to the RoT DCC circuit 120.

In the illustrated example of FIG. 7, at block 706, the CDSM circuit 114 accesses, via the second interface circuit 118, a message from the TSM circuit 108 of the SiP. At block 708, the CDSM circuit 114 detects that the message includes a request to initiate a secure communication session with the CDSM circuit 114 according to a first security protocol (e.g., SPDM). In the example of FIG. 7, at block 710, the CDSM circuit 114 adds a header to the request. For example, the CDSM circuit 114 adds a proprietary header to the request.

In the illustrated example of FIG. 7, at block 712, the CDSM circuit 114 causes the second interface circuit 118 to forward the request to the RoT DCC circuit 120. In the example of FIG. 7, at block 714, based on receiving a response to the request from the RoT DCC circuit 120, the CDSM circuit 114 causes the second interface circuit 118 to send the response to the TSM circuit 108. At block 716, the CDSM circuit 114 accesses a session key for the secure communication session, the session key generated by the RoT DCC circuit 120. In the example of FIG. 7, at block 718, the CDSM circuit 114 causes the second interface circuit 118 to send the session key to the TSM circuit 108. At block 720, the CDSM circuit 114 utilizes the session key to secure communication with the TSM circuit 108 according to a second security protocol (e.g., TDISP).

FIG. 8 is a flowchart representative of example machine-readable instructions and/or example operations 800 that may be executed, instantiated, and/or performed by example programmable circuitry to implement the RoT DCC circuit 120 of FIG. 1. The machine-readable instructions and/or the operations 800 begin at block 802, at which the RoT DCC circuit 120 mutually authenticates with the CDSM circuit 114 of the first chiplet 104₁ of a SiP (e.g., the system 100). At block 804, the RoT DCC circuit 120 creates unique identifiers (e.g., the RoT DCC certificates 122) for the first chiplet 104₁ (e.g., the CDSM circuit 114) and each of the one or more accelerator circuits 116 of the first chiplet 104₁.

In the illustrated example of FIG. 8, at block 806, the RoT DCC circuit 120 creates respective public, private key pairs for the first chiplet 104₁ and each of the one or more accelerator circuits 116. For example, public, private key pairs are used by the RoT DCC circuit 120 for authentication of one or more accelerator circuits and/or key management. At block 808, the RoT DCC circuit 120 logs the respective public, private key pairs into platform root certification keys for the SiP (e.g., the system 100). In the example of FIG. 8, at block 810, the RoT DCC circuit 120 accesses, from the CDSM circuit 114, a firmware measurement and security version number for at least one accelerator circuit of the first chiplet 104₁.

In the illustrated example of FIG. 8, at block 812, based on receiving a request to generate a secure communication session with the CDSM circuit 114, the RoT DCC circuit 120 processes the request to generate a response, the request generated by the TSM circuit 108 of the SiP (e.g., the system 100). At block 814, the RoT DCC circuit 120 causes an interface circuit (e.g., a UCIe interface circuit) of the RoT chiplet 106 to send the response to the CDSM circuit 114. In the example of FIG. 8, at block 816, the RoT DCC circuit 120 generates a session key for the secure communication session between the TSM circuit 108 and the CDSM circuit 114.

In the illustrated example of FIG. 8, at block 818, the RoT DCC circuit 120 causes the interface circuit of the RoT chiplet 106 to deliver the session key to the CDSM circuit 114. Additionally, at block 820, the RoT DCC circuit 120 deletes the session key from the RoT DCC circuit 120. As described above, the RoT DCC circuit 120, sometimes referred to as the SiP security circuit, authenticates at least one accelerator circuit with the TSM circuit 108 (e.g., a core processor circuit) to provide on-package security within a SiP.

As describe above, examples disclosed herein include an identity and authentication security architecture for deploying confidential computing (e.g. TDX-Connect) on multiple chiplets and/or multiple tiles, where each chiplet and/or tile includes multiple accelerator circuits (e.g., AI processors, I/O devices, etc.) and the multiple chiplets and/or tiles are within a single package, where each accelerator circuit is to operate as an RCiEP device. Examples disclosed herein define an architecture construct that centralizes identity establishment and management for all chiplets in a SiP. Such centralization includes creating chiplet and/or tile identities, updating identities as a security profile changes, and securely communicating identities for trust and key establishment.

Additionally, examples disclosed herein define an architecture construct that distributes chiplet and accelerator circuit security state management responsibilities to device entities per specific role-based functions of device entities. For example, disclosed methods, apparatus, and articles of manufacture allow an optimal product solution for security analysis, implementation, and verification. Examples disclosed herein also define an architecture construct that provides a TD attestation system for disaggregated and multi-chiplet accelerator devices. For example, TDX, SGX, and/or Advanced Micro Devices secure encrypted virtualization (AMD-SEV) attestation can be leveraged for TD attestation. Examples disclosed herein also define an architecture construct that provides secure inter-chiplet communication across UCIe specified interfaces. For example, secure inter-chiplet communication can occur over primary or sideband channels.

In addition to providing confidential computing between trusted software and accelerator circuits in SiPs and/or SoCs, examples disclosed herein include fleet management in a multi-die, multi-chiplet, and/or multi-tile platform. Deploying and managing a SiP and/or a SoC at the edge of a network is complex. For example, a SiP deployed at the edge is a heterogeneous platform that is distributed, unmanned, and physically unsecured (e.g., an edge device may be housed in a locker that is relatively unsecure compared to a data center).

As described above, a SiP and/or a SoC can include multiple dies (also called dielets or tiles) that are each capable of being swapped in and/or out like modular components. Additionally, platforms may be designed according to modular standards such as OCP and can have multiple ledges for each component of the platform. Users of a SiP and/or a SoC expect fleet management to perform consistently as in single-die environments despite the multi-die nature of SiPs and/or SoCs. However, a consistent disaggregated SiP and/or SoC infrastructure architecture component that can be reliably used to deliver differentiated edge services does not exist.

For example, edge service providers have used a combination of different elements of a platform to manage edge devices and deliver edge services. These approaches include using an operating system (OS) and/or host-based application or an external sideband management controller such as a baseboard management controller (BMC), a lights-off processor (LOP), among others. OpenBMC and OCP strive to define unifying technologies and interoperability but are oriented around an imperative, centrally initiated system control interface. As such, the models offered by OpenBMC and OCP allow for a declarative systems approach to dedicated system-controlled silicon.

However, host-based and sideband fleet management technologies are severely limited by the inability to scale to address the modularity of SiPs and/or SoCs (e.g., constructed of multiple dies) and platforms (e.g., constructed of multiple ledges). Additionally, host-based fleet management technologies are severely limited by not allowing for critical pre-boot edge device management including secure identity-based provisioning, dynamic posture-based SoC and/or platform key management, OS-independent recovery, remote debug, among others. Also, sideband-based components are limited and not standardized (e.g., diverse in capabilities). For example, sideband-based components are not secure and cannot be relied upon for any trusted device fleet management functions.

Additionally, vendors of sideband-based components are technology and cost limited. For example, sideband-based components are implemented external to the SoC and as such, cannot access valuable SiP-trusted and/or SoC-trusted services. Additionally, the modular nature of SiPs and/or SoCs will increase the cost of implementing sideband-based components for fleet management. As a result, edge fleet management continues to be fragmented and localized to specific vendors and inhibiting broad scalable deployments.

Examples disclosed herein include fleet management, provisioning, and visibility across edge deployments that are standardized, scalable, and secure. For example, example fleet management in a SiP and/or a SoC disclosed herein is low cost, scalable, automated (e.g., handsfree), and secure allowing for remote visibility and secure access through out of band (OOB) channels. Additionally, example fleet management disclosed herein provides availability and survivability (e.g., even when a SoC is not powered). Examples disclosed herein include a fleet management system (FMS) that provides consistent capability in a heterogenous system. For example, example FMS disclosed herein includes the ability of an un-provisioned device deployed in the field to "call home" for secure provisioning as described below.

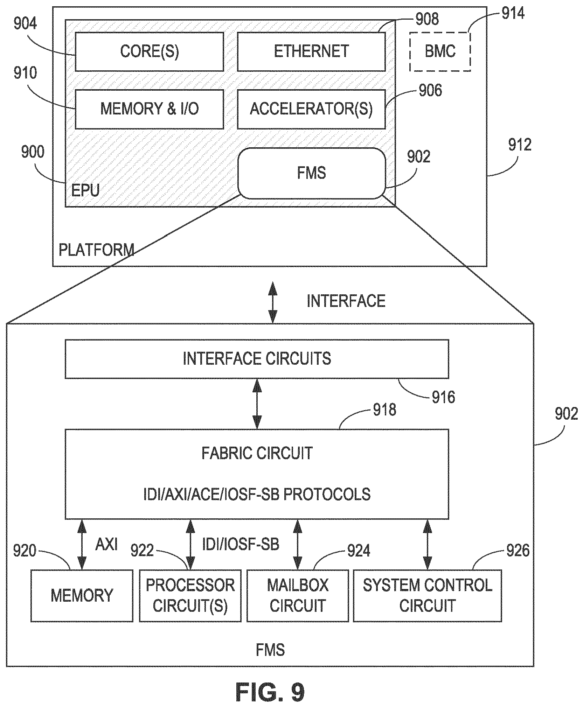

FIG. 9 is a block diagram of an example system in a package (SiP) 900 including an example fleet management system (FMS) circuit 902. In the example of FIG. 9, the SiP 900 is an edge processor unit (EPU) and includes the example FMS circuit 902, an example core chiplet 904, an example accelerator chiplet 906, an example networking chiplet 908, and an example memory and input/output (I/O) chiplet 910. Additionally, in the example of FIG. 9, the SiP 900 is implemented on an example platform 912. In some examples, the SiP 900 includes an example baseboard management controller (BMC) circuit 914. In some examples, the SiP 900 includes more than one instance of the FMS circuit 902, depending on customer deployment and stock keeping unit (SKU) requirements.

In the illustrated example of FIG. 9, the core chiplet 904 includes one or more core processor circuits that perform general processing on the SiP 900. Additionally, the accelerator chiplet 906 includes one or more accelerator circuits that are implemented similar to the one or more accelerator circuits 116 described above. In some examples, the accelerator chiplet 906 also includes one or more memory control circuits and/or one or more interfacing circuits. In the example of FIG. 9, the networking chiplet 908 includes one or more network interface circuits such as a network interface card (NIC) and provides network accessibility to the SiP 900.

In the illustrated example of FIG. 9, the memory and I/O chiplet 910 includes one or more memory control circuits to provide access the memory of the SiP 900 and/or the platform 912 as well as one or more interfacing circuits to communicate with I/O devices of the platform 912. In some examples, the memory and I/O chiplet 910 also includes one or more accelerator circuits. In the example of FIG. 9, the BMC circuit 914 is embedded in the motherboard of the platform 912 and allows an administrator to remotely monitor and manage the platform 912, even when the platform 912 is off and/or unresponsive.

In the illustrated example of FIG. 9, the FMS circuit 902 is a dedicated and isolated component of the SiP 900 that runs adjacent to but independent of host resources (e.g., other components of the SiP 900) and is responsible for the onboarding and recovery of an edge system (e.g., the SiP 900). For example, the FMS circuit 902 provides isolation of control and authority over management of the SiP 900 while providing assurances of recoverability of the SiP 900. The FMS circuit 902 is capable of autonomously recovering the SiP 900 using a declarative configuration model with an external Fleet Manager (e.g., a fleet management service).

In the illustrated example of FIG. 9, the FMS circuit 902 is designed to be implemented across a highly disaggregated, multi-chiplet SiP and/or SoC such as the SiP 900. The architecture of the FMS circuit 902 provides flexibility to integrate the FMS circuit 902 with one or more of the chiplets within the SiP 900 or in the SiP 900 as an individual chiplet depending on the fleet management requirements and features desired. In the example of FIG. 9, the FMS circuit 902 comprehensively assesses various chiplets of the SiP 900 and provides design and flow solutions to integrate the FMS circuit 902 according to the product and platform choice. For example, the FMS circuit 902 manages the SiP 900 and accelerator circuits of the SiP 900 regardless of whether the accelerator circuits are implemented on the accelerator chiplet 906, the memory and I/O chiplet 910, and/or any other chiplet of the SiP 900.

As described above, the architecture of the FMS circuit 902 allows for the FMS circuit 902 to be integrated into any of the above-described disaggregated chiplets in an EPU such as the SiP 900. In a multi chiplet disaggregated SiP, each functionality provided by the SiP can be a chiplet. As such, the FMS circuit 902 advantageously provides flexibility to create a scalable multi-die system-in-package combination that can mix and match core chiplets, memory and I/O chiplets, accelerator chiplets, and networking chiplets, among others. Additionally, the FMS circuit 902 advantageously provides for EPUs that target specific use cases.

In the illustrated example of FIG. 9, the FMS circuit 902 provides comprehensive fleet management for applications across the broad and diverse environment where an EPU (e.g., the SiP 900) is deployed. As such, the FMS circuit 902 provides fleet management capabilities across EPUs that are designed for use cases such as AI and media processing as well as across EPUs that are designed for use cases such as networking and security. In the example of FIG. 9, the FMS circuit 902 includes example interface circuits 916, an example fabric circuit 918, example memory 920, one or more example processor circuits 922, an example mailbox circuit 924, and an example system control circuit 926.

In the illustrated example of FIG. 9, the interface circuits 916 support multiple interface types that allow the FMS circuit 902 to connect to host (e.g., the core chiplet 904) of the SiP 900 (e.g., an Intel-based platform, a reduced instruction set computer (RISC)-based platform, an advanced RISC machine (ARM)-based platform, etc.), irrespective of where the FMS circuit 902 is integrated. As such, after the FMS circuit 902 onboards the SiP 900 with a remote fleet management service, the FMS circuit 902 can be discovered, enumerated, and programmed by a basic input/output system (BIOS), an OS, and/or a driver of the SiP 900, agnostic of where the FMS circuit 902 is physically located within the SiP 900.

In the illustrated example of FIG. 9, the interface circuit 916 allow the FMS circuit 902 to connect to the SiP 900 and be discovered by the host SW stack executing on the core chiplet 904 via standard SoC-specific and/or standard SiP-specific internal PCIe fabrics and/or interfaces. Additionally or alternatively, the interface circuits 916 allow the FMS circuit 902 to connect to the SiP 900 and be discovered by the host SW stack executing on the core chiplet 904 via proprietary sideband and/or low performance global fabrics. In some examples, the interface circuits 916 allow the FMS circuit 902 to connect to the SiP 900 through a peripheral interface such as an interface implemented according to the improved inter-integrated circuit (I3C) protocol or the system management bus (SMBUS) protocol.

In the illustrated example of FIG. 9, irrespective of where the FMS circuit 902 is located and what physical interface the FMS circuit 902 uses to connect to the SiP 900, the FMS circuit 902 provides a standard register definition, standard programmable HW-SW interface, and standard set of processes and communication messages for communication with the core chiplet 904. As such, the FMS circuit 902 can be integrated in any of the accelerator chiplet 906, the networking chiplet 908, and/or the memory and I/O chiplet 910. Additionally or alternatively, the FMS circuit 902 can be integrated into an on-package ASIC (e.g., within the SiP 900) and/or as an off-package circuit (e.g., on the platform 912 but external to the SiP 900).

Regardless of where the FMS circuit 902 is integrated, the FMS circuit 902 maintains secure interconnects (e.g., protected by circuit-to-circuit authentication and encryption protocols such as SPDM) to dependent circuits. For example, on reset of the SiP 900, the FMS circuit 902 creates an authenticated, protected channel to an RoT of the SiP 900 (e.g., the RoT DCC circuit 120 of FIG. 1) via the interface circuits 916 to facilitate provisioning of the SiP 900 with authorized firmware and a security profile. Additionally, the FMS circuit 902 is provided with an internet connection point regardless of (1) the tile or chiplet on which the FMS circuit 902 is physically present and (2) the tile or chiplet on which a networking circuit (e.g., an IPU, an fNIC, etc.) is physically present. As described above, the interface circuits 916 allow the FMS circuit 902 to connect to the SiP 900 via an interface implemented according to a variety of protocols such as the I3C protocol, the SMBUS protocol, or the Converged Security and Management Engine (CSME) protocol, among others.

In the illustrated example of FIG. 9, the fabric circuit 918 is a circuit that connects the components of the FMS circuit 902. For example, the fabric circuit 918 can be implemented in accordance with a protocol such as the intra-die interconnect (IDI) protocol (e.g., a proprietary protocol for agent to fabric communications including memory coherency), the advanced extensible interface (AXI) protocol, the AXI coherency extensions (ACE) protocol, and/or the Intel on-chip system fabric (IOSF) sideband (IOSF-SB) protocol. In the example of FIG. 9, the memory 920 is implemented by static random-access memory (SRAM). For example, the memory 920 includes eight megabytes of SRAM.

In the illustrated example of FIG. 9, the one or more processor circuits 922 are implemented by one or more core processor circuits. For example, the one or more processor circuits 922 support multithreading. In the example of FIG. 9, the mailbox circuit 924 is implemented as one or more of a DOE mailbox requestor or a DOE mailbox responder. Additionally, the system control circuit 926 communicates with an RoT of the SiP 900 (e.g., the RoT DCC circuit 120 of FIG. 1) via the interface circuits 916 to facilitate provisioning of the SiP 900 with authorized firmware and a security profile.

In the illustrated example of FIG. 9, the FMS circuit 902 reduces operational complexity and cost of implementing a SiP at the edge. For example, the FMS circuit 902 reduces monetary cost of initially provisioning edge devices. Additionally, the FMS circuit 902 allows for active management of edge devices without sending personnel to a deployment location of the edge devices (e.g., truck rolls). Also, the FMS circuit 902 provides additional visibility across an edge deployment.

In the illustrated example of FIG. 9, the FMS circuit 902 provides a cross-platform, secure, and autonomous root of management in a device. For example, the FMS circuit 902 delivers a fully automated, consistent cross-platform scaling set of fleet deployment and management services such as secure provisioning, dynamic unique device-ID based key management, AI and/or telemetry-based recoverability, among others. As used herein, ID is used to refer to identity or identifier interchangeably. Additionally, the FMS circuit 902 supports a modular silicon architecture. For example, a SiP can be manufactured with the FMS circuit 902 implemented in a variety of platforms as described herein.

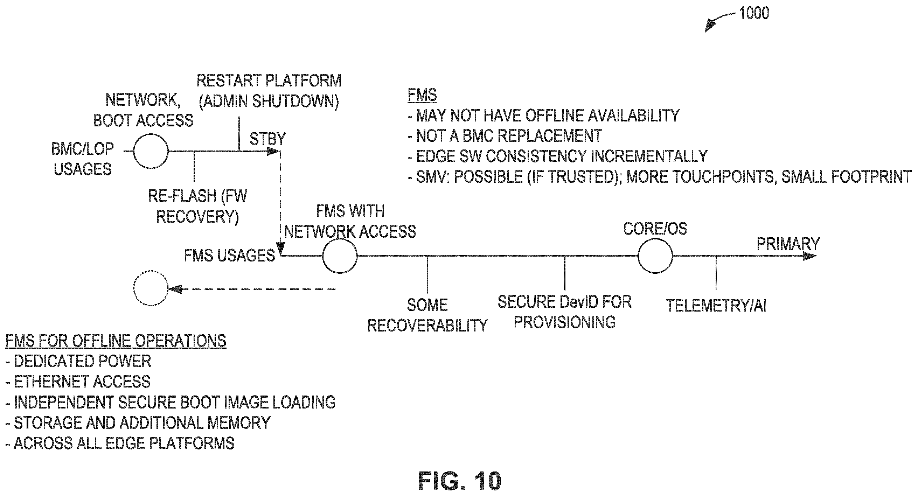

FIG. 10 is a graphical illustration 1000 depicting example availability of the FMS circuit 902 depending on where the FMS circuit 902 is implemented with respect to the SiP 900 of FIG. 9. For example, to provide fleet management capabilities to the SiP 900, the FMS circuit 902 should be enabled and available even while power is not being provided to other components of the SiP 900.

For example, regardless of where the FMS circuit 902 is implemented, the FMS circuit 902 should have access to a dedicated RoT for the SiP 900 (e.g., to RoT DCC circuit 120 of FIG. 1), a storage medium, and paths for networking (e.g., via the networking chiplet 908 and/or a dedicated network access port on the FMS circuit 902) and power that are independent of the other components of the SiP 900. The FMS circuit 902 can have such capabilities whether the FMS circuit 902 is integrated on the package of the SiP 900 or on a chiplet in the SiP 900.

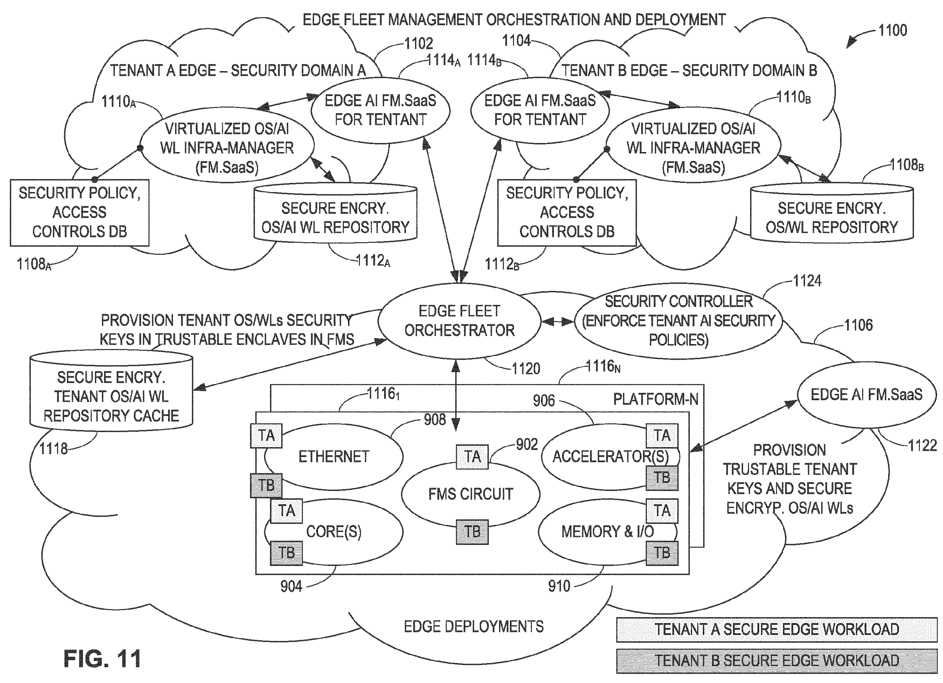

FIG. 11 is a block diagram of an example system 1100 including the FMS circuit 902 of FIG. 9. In the example of FIG. 11, the system 1100 includes a first example security domain 1102, a second example security 1104, and an example edge deployment 1106. In the example of FIG. 11, the first security domain 1102 represents a software deployment of a first tenant (e.g., an enterprise) to execute one or more workloads on the edge deployment 1106. Also, in the example of FIG. 11, the second security domain 1104 represents a software deployment of a second tenant (e.g., an enterprise) to execute one or more workloads on the edge deployment 1106.

In the illustrated example of FIG. 11, the first security domain 1102 includes a first example security policy and access control database 1108_{A}, a first example virtualized OS/AI workload infrastructure manager 1110_{A}, a first example secure encrypted OS/AI workload repository 1112_{A}, and a first example edge AI fleet management (FM) system-as-a-service (SaaS) 1114_{A}. In the example of FIG. 11, the second security domain 1104 includes a second example security policy and access control database 1108_{B}, a second example virtualized OS/AI workload infrastructure manager 1110_{B}, a second example secure encrypted OS/AI workload repository 1112_{B}, and a second example edge AI fleet management (FM) software-as-a-service (SaaS) 1114_{B}.

In the illustrated example of FIG. 11, the edge deployment 1106 includes a first example edge processor unit (EPU) 1116₁ through an Nth example edge processor unit (EPU) 1116_{N}. Additionally, the edge deployment 1106 includes an example secure encrypted tenant OS/AI workload repository cache 1118, an example edge fleet orchestrator 1120, an example edge AI fleet management (FM) software-as-a-service (SaaS) 1122, and an example security controller 1124. Each instance of the first EPU 1116₁ through the Nth EPU 1116_{N} is implemented similarly to the SiP 900. For example, the first EPU 1116₁ includes the FMS circuit 902, the core chiplet 904, the networking chiplet 908, and the memory and I/O chiplet 910.

In the illustrated example of FIG. 11, each of the first security policy and access control database 1108_{A} and the second security policy and access control database 1108_{B} stores one or more security policies and access control parameters for respective ones of the first tenant and the second tenant. In the example of FIG. 11, each of the first virtualized OS/AI workload infrastructure manager 1110_{A} and the second virtualized OS/AI workload infrastructure manager 1110_{B} deploys and/or manages one or more OSes and/or one or more AI workloads across the edge deployment 1106 for respective ones of the first tenant and the second tenant. For example, the first virtualized OS/AI workload infrastructure manager 1110_{A} and the second virtualized OS/AI workload infrastructure manager 1110_{B} access the one or more OSes and/or one or more AI workloads from the first secure encrypted OS/AI workload repository 1112_{A} and the second secure encrypted OS/AI workload repository 1112_{B}, respectively.

In the illustrated example of FIG. 11, the first edge AI FM SaaS 1114_{A} and the second edge AI FM SaaS 1114_{B} deploy one or more OSes and/or one or more AI workloads selected by the first virtualized OS/AI workload infrastructure manager 1110_{A} and the second virtualized OS/AI workload infrastructure manager 1110_{B}, respectively, across the edge deployment 1106. In the example of FIG. 11, the secure encrypted tenant OS/AI workload repository cache 1118 caches the one or more OSes and/or one or more AI workloads received from the first edge AI FM SaaS 1114_{A} and/or the second edge AI FM SaaS 1114_{B}. Based on communications with the first edge AI FM SaaS 1114_{A} and/or the second edge AI FM SaaS 1114_{B}, the edge fleet orchestrator 1120 provisions security keys for one or more tenant OSes and/or workloads in trustable enclaves within the FMS circuit 902.

In the illustrated example of FIG. 11, the edge AI FM SaaS 1122 provisions trustable tenant keys and one or more secure encrypted OSes and/or one or more secure encrypted AI workloads on one or more of the first EPU 1116₁ through the Nth EPU 1116_{N}. Additionally, the security controller 1124 enforces one or more AI security policies for the first tenant and the second tenant. In the example of FIG. 11, per tenant requirements, one or more of the first EPU 1116₁ through the Nth EPU 1116_{N} may not include any OS images and/or SW images and/or security contexts. For example, some tenants may require the first EPU 1116₁ through the Nth EPU 1116_{N} to be deployed in this manner to allow for EPUs to be dynamically provisioned through geographically specific policies (e.g., EPUs in the United Kingdom receive a first policy and EPUs in the United States receive a second policy).

Advantageously, each instance of the FMS circuit 902 can transmit an internally initiated communication from within the out-of-band silicon of the FMS circuit 902. For example, when the FMS circuit 902 is powered on, the FMS circuit 902 includes firmware to discover, authenticate, and associate with a remote fleet manager (e.g., one or more of the first virtualized OS/AI workload infrastructure manager 1110_{A}, the first edge AI FM SaaS 1114_{A}, the second virtualized OS/AI workload infrastructure manager 1110_{B}, or the second edge AI FM SaaS 1114_{B}). As such, each instance of the FMS circuit 902 can initiate the process to dynamically and securely provision the first EPU 1116₁ through the Nth EPU 1116_{N} via the "call home" security and configuration credentials. Other approaches, such as for BMCs and/or CSMEs, require a remote fleet manager to initiate communication.

In the illustrated example of FIG. 11, the FMS circuit 902 will initiate a communication with a remote fleet manager via the "call home" feature to provide a remote fleet manager with a platform identity of the FMS circuit 902. For example, firmware of the FMS circuit 902 implements the fast identity online (FIDO) device onboard (FDO) protocol to execute a discovery function to identify one or more remote fleet managers that the FMS circuit 902 should attempt to onboard with during the provisioning lifecycle. In the example of FIG. 11, the platform identity of the FMS circuit 902 is based on the DICE standard and includes security and device credentials for the FMS circuit 902.

In the illustrated example of FIG. 11, the one or more discovered remote fleet managers authenticate the security and device credentials of the FMS circuit 902. For example, a remote fleet manager utilizes the DICE identity of the FMS circuit 902 to authenticate the FMS circuit 902. In the example of FIG. 11, the FMS circuit 902 utilizes a hardware anchored identity (e.g., derived according to the DICE standard) to authenticate with a remote fleet manager. The use of a hardware identity, as further defined by IEEE 802.1AR, provides a basis for nonrepudiation of connected devices and associated identity authenticity. The process of generating an identity and proving an identity is delegated to other silicon in an EPU (e.g., the RoT DCC circuit 120 as described above).

In the illustrated example of FIG. 11, the remote fleet manager matches the platform identity of the FMS circuit 902 to an identifier of a deployment of a tenant and location. For example, an identifier of a deployment of a tenant is based on the IEEE device ID standard. As such, the remote fleet manager dynamically identifies a tenant-specific profile and securely deploys the tenant-specific profile on the FMS circuit 902. For example, as part of the FDO protocol, a remote fleet manager provides the FMS circuit 902 with a runtime configuration (e.g., OSes, security contexts, SW and/or FW images, etc. to configure an EPU, etc.) and a payload including any new credentials required for ongoing operations and communication with the remote fleet manager.

As such, the FMS circuit 902 can program other components (e.g., a BIOS processor circuit, a core chiplet, an accelerator chiplet, a memory and I/O chiplet, a networking chiplet, etc.) with BIOS instructions and/or an OS based on the runtime configuration and/or payload received from the remote fleet manager. Additionally, the FMS circuit 902 and the one or more remote fleet managers communication to complete a transfer of ownership process (e.g., a FIDO TO2 process) to transfer control of an EPU to the one or more remote fleet managers.

In the example of FIG. 11, the FMS circuit 902 also includes an operation (e.g., a process, a mechanism, etc.) for the host OS and/or BIOS to communicate with the FMS circuit 902 after the BIOS instructions and/or OS are installed (e.g., on the core chiplet 904, on the accelerator chiplet 906, etc.). As such, a host interface (e.g., the interface circuits 916 of FIG. 9) of the FMS circuit 902 can communicate with the host OS and/or BIOS for management of an EPU during active operation.

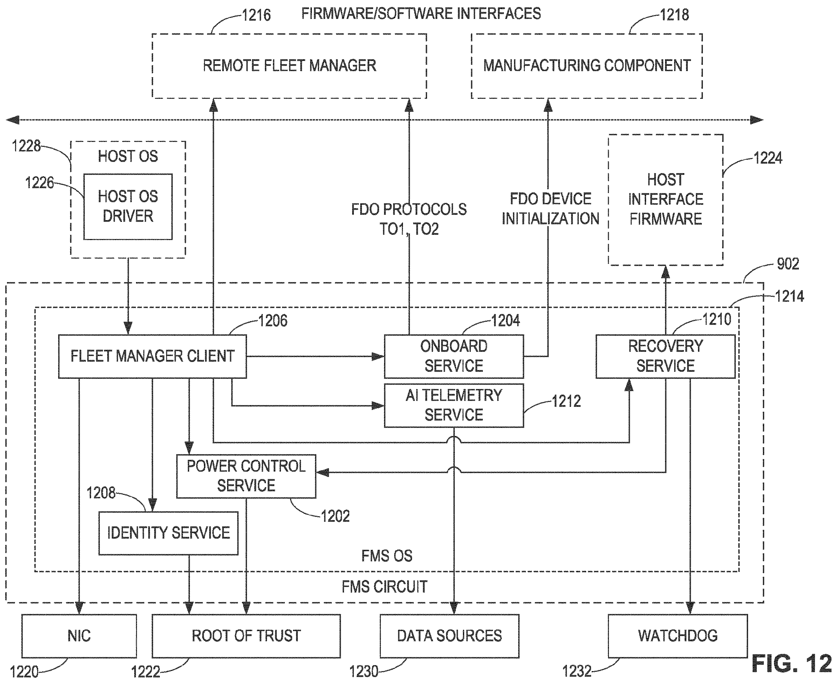

FIG. 12 is a block diagram of an example implementation of the FMS circuit 902 of FIG. 9. In the example of FIG. 12, the FMS circuit 902 includes an example power control service 1202, an example onboard service 1204, an example fleet manager client 1206, an example identity service 1208, an example recovery service 1210, and an example AI telemetry service 1212. For example, the power control service 1202, the onboard service 1204, the fleet manager client 1206, the identity service 1208, the recovery service 1210, and the AI telemetry service 1212 are executed within an example OS 1214 of the FMS circuit 902.

In the illustrated example of FIG. 12, when the power control service 1202 powers on the FMS circuit 902, the FMS circuit 902 discovers, authenticates, and associates with an example remote fleet manager 1216. For example, the onboard service 1204 executes a discovery function according to an FDO protocol to identify, based on data from an example manufacturing component 1218, the remote fleet manager 1216 that the FMS circuit 902 should attempt to onboard with during the provisioning lifecycle. In the example of FIG. 12, the onboard service 1204 utilizes a standard-based interface (e.g., UCIe) with hardware of an EPU (e.g., with which the FMS circuit 902 is integrated) to communicate with the remote fleet manager 1216.

In the illustrated example of FIG. 12, after discovering the remote fleet manager 1216, the fleet manager client 1206 causes an example network interface card (NIC) circuit 1220 of the EPU to transmit a communication to the remote fleet manager 1216. For example, the fleet manager client 1206 utilizes a standard-based interface (UCIe) with the NIC circuit 1220. In the example of FIG. 12, the communication includes a platform identity for the FMS circuit 902. To access the platform identity, the identity service 1208 communicates with an example root of trust (RoT) circuit 1222 of the EPU. For example, the identity service 1208 utilizes a standard-based interface (UCIe) with the RoT circuit 1222.

In the illustrated example of FIG. 12, the platform identity of the FMS circuit 902 is based on the DICE standard and includes security and device credentials for the FMS circuit 902. In the example of FIG. 12, the remote fleet manager 1216 authenticates the security and device credentials of the FMS circuit 902. For example, the remote fleet manager 1216 utilizes the DICE identity of the FMS circuit 902 to authenticate the FMS circuit 902. In the example of FIG. 12, the remote fleet manager 1216 matches the platform identity of the FMS circuit 902 to an identifier of a deployment of a tenant and location of the EPU.

As such, the remote fleet manager 1216 identifies a tenant-specific profile and securely deploys the tenant-specific profile to the FMS circuit 902. For example, the tenant-specific profile includes a runtime configuration (e.g., OSes, security contexts, SW and/or FW images, etc.) to configure the EPU and a payload including any new credentials required for ongoing operations and communication with the remote fleet manager 1216. In the example of FIG. 12, based on the tenant-specific profile, the recovery service 1210 communicates with example host interface firmware 1224 to program other components (e.g., a BIOS processor circuit, a core chiplet, an accelerator chiplet, a memory and I/O chiplet, a networking chiplet, etc.) of the EPU with BIOS instructions and/or an OS.

Additionally, the onboard service 1204 and the remote fleet manager 1216 communication to complete a transfer of ownership process (e.g., a FIDO TO1 process, a FIDO TO2 process, etc.) to transfer control of the EPU to the remote fleet manager 1216. In the example of FIG. 12, the fleet manager client 1206 also communicates with an example host OS driver 1226 of an example host OS 1228 after the BIOS instructions and/or OS are installed (e.g., on the core chiplet 904, on the accelerator chiplet 906, etc.). As such, the fleet manager client 1206 can communicate with the host OS 1228 for management of the EPU during active operation.

For example, the fleet manager client 1206 collects data from the host OS 1228 and provides the data to the AI telemetry service 1212. For example, the AI telemetry service 1212 executes localized independent recovery and operational optimization actions for resources of the SiP. In some examples, the AI telemetry service 1212 forwards telemetry data to one or more data sources 1230 (e.g., external to the EPU, within the EPU, etc.). As such, the recovery service 1210 can communicate with an example watchdog timer circuit 1232 to recover the EPU as needed. As described herein, the fleet manager client 1206 acts as an example interface between the host OS 1228 and the remote fleet manager 1216.

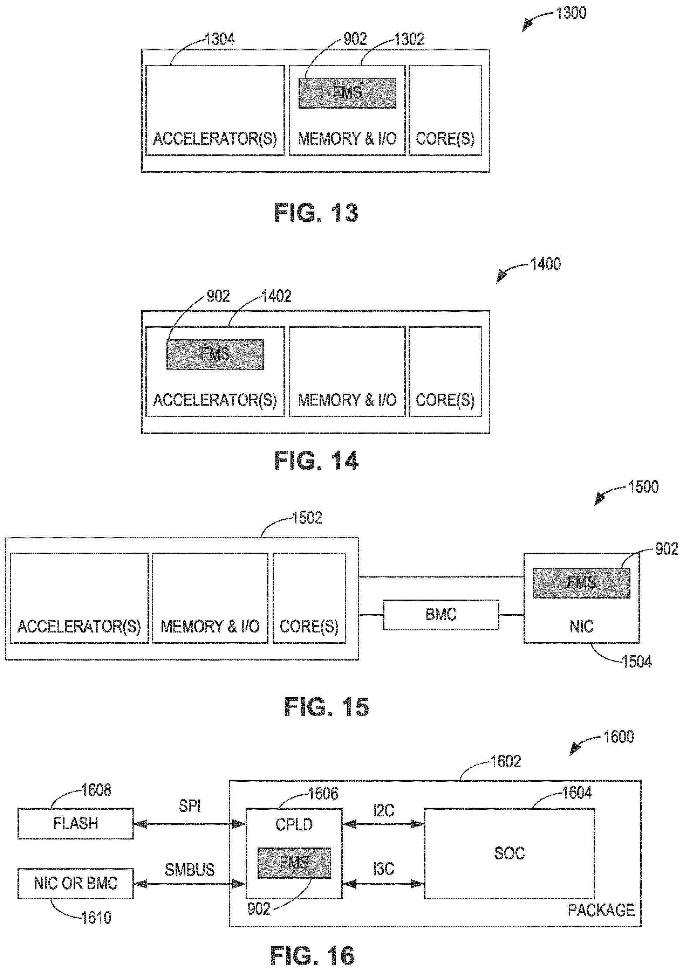

As described above, the FMS circuit 902 can be implemented on package in a SiP and/or with any die, chiplet, tile, etc. of a SiP. For example, FIG. 13 is a block diagram of an example SiP 1300 including the FMS circuit 902 of FIG. 9 implemented in an example memory and input/output (I/O) chiplet 1302 of the SiP 1300. FIG. 14 is a block diagram of an example SiP 1400 including the FMS circuit 902 of FIG. 9 implemented in an example accelerator chiplet 1402 of the SiP 1400.

FIG. 15 is a block diagram of an example system 1500 including the FMS circuit 902 of FIG. 9 implemented external to an example SiP 1502. For example, the FMS circuit 902 is implemented in an example network interface card (NIC) circuit 1504 external to the SiP 1502. FIG. 16 is a block diagram of an example system 1600 including an example SiP 1602 with the FMS circuit 902 of FIG. 9 implemented as a dedicated chiplet. For example, the SiP 1602 includes an example SoC 1604 and an example complex programmable logic device (CPLD) 1606 that implements the FMS circuit 902.

Returning to FIG. 13, the memory and I/O chiplet 1302 includes input and output interface circuits compliant with protocols such as the PCIe protocol, the Serial Peripheral Interface (SPI) protocol, the enhanced SPI (eSPI) protocol, the I3C protocol, the SMBUS protocol, the inter-integrated circuit (I2C) protocol, a double data rate (DDR) protocol (e.g., the DDR5 protocol), among others. For example, the memory and I/O chiplet 1302 is implemented similarly to the memory and I/O chiplet 910 of FIG. 9. In the example of FIG. 13, the SiP 1300 also includes an example accelerator chiplet 1304. For example, the accelerator chiplet 1304 is implemented similarly to the accelerator chiplet 906 of FIG. 9.

In the illustrated example of FIG. 13, when the FMS circuit 902 is integrated with the memory and I/O chiplet 1302, there are at least two options for the FMS circuit 902 to be exposed to the software of the SiP 1300 (e.g., host EPU). First, the FMS circuit 902 can connect to an internal PCIe compatible fabric of the memory and I/O chiplet 1302 and expose itself as a PCIe RCiEP device. Second, the FMS circuit 902 can connect to the memory and I/O chiplet 1302 through a low performance global fabric. In the second case, the FMS circuit 902 includes an internal circuit to map the FMS circuit 902 to the software memory space of the SiP 1300 (e.g., the host EPU). Additionally, in the second case, BIOS of the SiP 1300 is notified through a reset fuse setting that the FMS circuit 902 is enabled. For example, the BIOS of the SiP 1300 communicates with the host OS of the SiP 1300 regarding the presence of the FMS circuit 902 and the host OS will access the register space of the FMS circuit 902 through the mapped memory space.

In the illustrated example of FIG. 13, the FMS circuit 902 can be enabled when the rest of the SiP 1300 is reset or powered down. In the example of FIG. 13, the FMS circuit 902 is powered through a dedicated power delivery rail and includes at least one circuit for early boot and reset control of the SiP 1300. If the SiP 1300 has an integrated networking controller, then the FMS circuit 902 can utilize the networking controller to communicate with an external remote fleet manager (e.g., a remote fleet management administrator entity) (e.g., running on the cloud). Additionally or alternatively, the FMS circuit 902 can connect to a NIC circuit of a platform on which the SiP 1300 is disposed for remote networking access using an SMBUS interface.

In the illustrated example of FIG. 14, the FMS circuit 902 is integrated with the accelerator chiplet 1402. In the example of FIG. 14, the accelerator chiplet 1402 includes at least one non-networking accelerator circuit and at least one networking accelerator circuit. For example, the accelerator chiplet 1402 is implemented similarly to the accelerator chiplet 906 of FIG. 9. In the example of FIG. 14, there are two options for the FMS circuit 902 to be exposed to the software of the SiP 1400 (e.g., host EPU). First, the FMS circuit 902 can connect to an internal PCIe compatible fabric of the accelerator chiplet 1402 and expose itself as a PCIe RCiEP device. Second, the FMS circuit 902 can connect to the accelerator chiplet 1402 through a low performance global fabric. In the second case, the FMS circuit 902 includes an internal circuit to map the FMS circuit 902 to the software memory space of the SiP 1400 (e.g., the host EPU).

In the illustrated example of FIG. 14, the FMS circuit 902 is powered through a dedicated power delivery rail and includes at least one circuit for early boot and reset control of the SiP 1400. As such, the FMS circuit 902 can be fully enabled even when the SiP 1400 is offline (e.g., when reset or powered down). In the example of FIG. 14, the FMS circuit 902 accesses telemetry and crash logs for the SiP 1400 through a global infrastructure of the SiP 1400.

In the illustrated example of FIG. 14, if the FMS circuit 902 is integrated with a networking accelerator circuit of the accelerator chiplet 1402, then the FMS circuit 902 utilizes the networking accelerator circuit to communicate with an external remote fleet manager (e.g., a remote fleet management administrator entity) (e.g., running on the cloud). Additionally or alternatively, if the FMS circuit 902 is integrated with a non-networking accelerator circuit of the accelerator chiplet 1402, then the FMS circuit 902 communicates with a remote fleet manager similar to the example of FIG. 13.

In the illustrated example of FIG. 15, the FMS circuit 902 is integrated external to the SiP 1502. As described above, the FMS circuit 902 is integrated with the NIC circuit 1504 external to the SiP 1502. In the example of FIG. 15, when the FMS circuit 902 is integrated inside an external NIC circuit, the FMS circuit 902 utilizes peripheral components of the NIC circuit to download firmware from the NIC SPI. Additionally, the FMS circuit 902 selfauthenticates the firmware.

In the illustrated example of FIG. 15, the FMS circuit 902 utilizes ethernet ports of the NIC circuit 1504 for remote network access. In the example of FIG. 15, the NIC circuit 1504 is designed to allow the FMS circuit 902 to access a network without the SiP 1502 accessing the network. Additionally, the FMS circuit 902 communicates with an RoT of the SiP 1502 via an I3C interface (e.g., between the NIC circuit 1504 and the SiP 1502) for security flows including device ID provisioning. In the example of FIG. 15, the FMS circuit 902 communicates with a telemetry circuit of the SiP 1502 through an I3C interface of the NIC circuit 1504.

In the illustrated example of FIG. 16, the FMS circuit 902 is integrated as an example CPLD 1606 (e.g., a CPLD FPGA) external to the SoC 1604 of the SiP 1602. For example the SoC 1604 includes a core chiplet, an accelerator chiplet, a networking chiplet, and a memory and I/O chiplet. In the example of FIG. 16, the CPLD 1606 is utilized by the SoC 1604 for non-volatile random-access memory (NVRAM) offload.

In the illustrated example of FIG. 16, the CPLD 1606 utilizes an SPI interface to connect to example flash memory 1608 of the system 1600 (e.g., platform) to download firmware to implement the FMS circuit 902. Additionally, the FMS circuit 902 utilizes an I3C interface to communicate with the RoT of the SoC 1604 using SPDM flows (e.g., to complete fleet management security flows). In the example of FIG. 16, the FMS circuit 902 also utilizes an I3C interface to connect to a telemetry circuit of the SoC 1604.

In the illustrated example of FIG. 16, the FMS circuit 902 exposes itself to a host interface of the SoC 1604 through a memory mapped space of the SoC 1604. Additionally, the CPLD 1606 includes an SMBUS interface to allow the FMS circuit 902 to connect to an example NIC circuit 1610 (or BMC) of the system 1600 (e.g., platform) for remote network access. In the example of FIG. 16, the FMS circuit 902 is active and operational when the SoC 1604 is reset or powered down. Table 1 below illustrates example capabilities of the FMS circuit 902 depending on where the FMS circuit 902 is implemented. Additionally, Table 2 below illustrates example offline availability of the FMS circuit 902 when implemented in the CPLD 1606 of FIG. 16.

**Table 1**

| **Location of FMS circuit** | **Option A: Memory and I/O chiplet** | **Option B: Accelerator chiplet** | **Option C.1: External NIC** |
|---|---|---|---|
| | | | **Option C.2: CPLD** |
| **Usage and Boot** | RoT chiplet Boot | RoT chiplet Boot | Self-boot; OOB network access: OK |
| | | | S5: OK with out-of-band management service (OOBMS) in S5. |
| **Secure Provisioning** | Supported | Supported | Supported |
| **Analytics & Telemetry** | Supported | Supported | Supported |
| **OOB Network Connectivity** | SMV: accelerator chiplet; | Same as Option A | NIC |
| | CMB: BMC | | |
| **RoT** | RoT chiplet & Trusted | RoT chiplet/accelerator chiplet & Trusted | NIC SBB with RoT chiplet through SPDM flows |
| **Recoverability** | Supported | Supported | Supported |

| Impact | | | |
|---|---|---|---|
| **SPI Flash Size Availability (8MB)** | SMV: OK; | Same as Option A | Integrated: Platform SPI; |
| | CMB: Yes, with 2xIFWI | | Discrete: Part of accelerator chiplet |
| **Design Changes** | RoT chiplet FW, FMS Integration, 2xIFWI, BM FW for tunneling | UCIe.SB flows for RoT chiplet, NSS change for Mng, FMS early bring up, 2xIFWI, BMC FW for tunneling | I3C, HIF, SPDM1.2, Mng Traffic for FMS, FW download & Auth |

**Table 2**

| **Availability Feature** | **Solution** |
|---|---|
| FMS circuit is available when the SoC is reset | The CPLD is powered with a dedicated platform voltage regulator (VR) that is different from the SoC VR and not reset when the SoC is reset |
| FMS circuit can access the RoT of the SoC | The I3C interface between the CPLD and the SoC allows the RoT and the FMS circuit to communicate for SPDM flows |
| FMS circuit can access the OOBMS of the SoC for secure telemetry flows | The I3C interface between the CPLD and the SoC allows the CPLD to have OOBMS support for SPDM flows |
| FMS circuit can access boot flash | The SPI interface between the CPLD and the flash memory allows the FMS circuit to access the flash memory |
| FMS circuit can access the NIC | The SMBUS interface between the CPLD and the NIC allows the FMS circuit to connect to the NIC (or BMC) to route network management component transport protocol (MCTP) traffic for the FMS circuit |
| FMS circuit can authenticate FW | The FMS circuit supports chip-level multithreading to authenticate firmware and boot loader in ROM of the FMS circuit |
| FMS circuit can access the host to program and/or communicate | The FMS circuit utilizes the I3C interface with the SoC to communicate with an internal IOSF SB interface of the SoC |

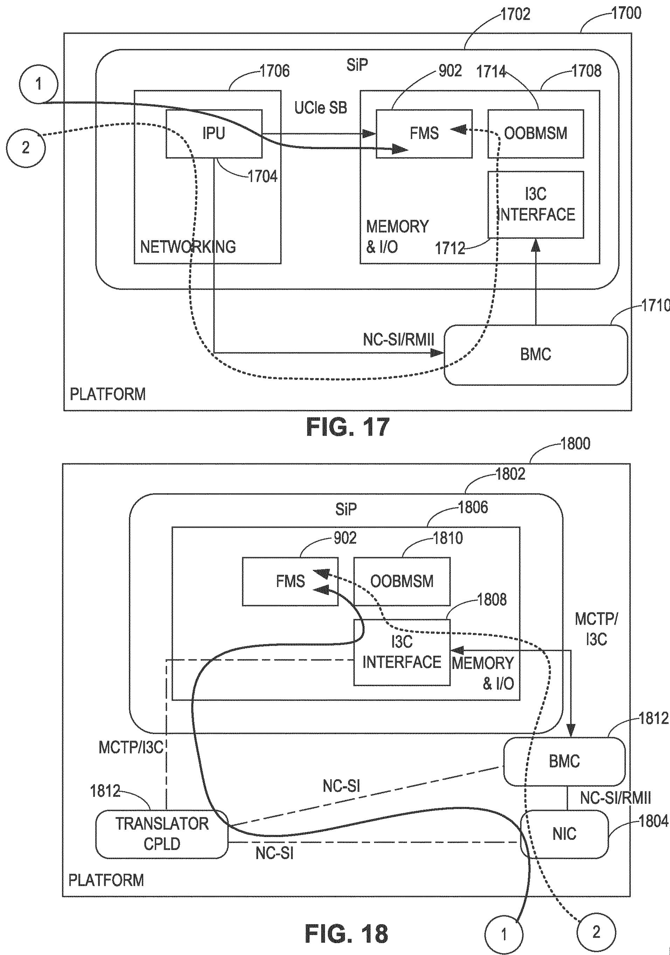

FIG. 17 is a block diagram illustrating example communication between the FMS circuit 902 of FIG. 9 and a network in an example platform 1700 where an example SiP 1702 includes an example infrastructure processor unit (IPU) circuit 1704 integrated in the SiP 1702. For example, functionality and usage of the FMS circuit 902 depends on network access. As such, the FMS circuit 902 should have access to a network (e.g., the Internet). Additionally, network access by the FMS circuit 902 should be through a secured network channel so that tenant-specific private keys and certificates can be embedded within the FMS circuit 902.

In the illustrated example of FIG. 17, the SiP 1702 includes an example networking chiplet 1706 and an example memory and I/O chiplet 1708. For example, the networking chiplet 1706 is implemented similarly to the networking chiplet 908 of FIG. 9 and the memory and I/O chiplet 1708 is implemented similarly to the memory and I/O chiplet 910 of FIG. 9. In the example of FIG. 17, the networking chiplet 1706 includes the IPU circuit 1704. In the example of FIG. 17, the IPU circuit 1704 is integrated with the networking chiplet 1706 and the FMS circuit 902 is integrated with the memory and I/O chiplet 1708 (e.g., a different chiplet than the IPU circuit 1704).

In the illustrated example of FIG. 17, the IPU circuit 1704 includes a management interface (e.g. an integrated management controller (IMC) interface). In some examples, the networking chiplet 1706 includes additional or alternative accelerator circuits. Additionally or alternatively, the FMS circuit 902 may be integrated with the networking chiplet 1706. In the example of FIG. 17, the FMS circuit 902 can communicate with a network in two manners. First, the FMS circuit 902 can communicate with a network via the IPU circuit 1704. Second, the FMS circuit 902 can communicate with a network via tunneling through an example BMC 1710 of the platform 1700.

In the first approach, the management interface of the IPU circuit 1704 is included in (e.g., added to) the sideband network of the SiP 1702. In the first approach, the sideband network (e.g., a UCIe SB network) of the SiP 1702 allows the IPU circuit 1704 to be discovered by any circuit on the same chiplet or one or more circuits on a different chiplet. As such, the FMS circuit 902 discovers the IPU circuit 1704 interconnected over the UCIe sideband standard. In the first approach, the FMS circuit 902 and the IPU circuit 1704 create a mutually authenticated secured channel. The mutual authentication can be based on manufacturer-provisioned certificates (e.g., unique per-part and per-device) and/or via explicit attestation (e.g. using an RoT of the SiP 1702).

In the illustrated example of FIG. 17, in the first approach, the IPU circuit 1704 and the FMS circuit 902 have silicon "bridge" circuits that convert network packets from a network protocol (e.g., MCTP) to a sideband protocol (e.g., a UCIe SB protocol) and vice-versa. In the first approach, after establishing a secure channel between the IPU circuit 1704 and the FMS circuit 902, network packets can traverse back and forth between the FMS circuit 902 and the IPU circuit 1704. In the example of FIG. 17, the IPU circuit 1704 has Internet network interfaces provisioned (e.g., via secure orchestration as described herein).

In the illustrated example of FIG. 17, in the second approach, the management interface of the IPU circuit 1704 is included in (e.g., added to) the sideband network of the BMC 1710. In the second approach, the sideband network (e.g., a network controller sideband interface (NC-SI) network, a reduced media-independent interface (RMII) network, etc.) of the BMC 1710 allows the IPU circuit 1704 to be discovered by the BMC 1710. As such, the BMC 1710 discovers the IPU circuit 1704 and creates a mutually authenticated secured channel with the IPU circuit 1704. The mutual authentication can be based on manufacturer-provisioned certificates (e.g., unique per-part and per-device) and/or via explicit attestation (e.g. using an RoT of the SiP 1702).

In the illustrated example of FIG. 17, in the second approach, the IPU circuit 1704 and the BMC 1710 have silicon "bridge" circuits that convert network packets from a network protocol (e.g., MCTP) to a sideband protocol (e.g., an NC-SI protocol, an RMII protocol, etc.) and vice-versa. In the second approach, after establishing a secure channel with the IPU circuit 1704, the BMC 1710 can forward network packets from the IPU circuit 1704 to the FMS circuit 902 via an example I3C interface circuit 1712 and an example out-of-band management service (OOBMS) circuit 1714. As such, network packets can traverse back and forth between the FMS circuit 902 and the IPU circuit 1704 via the BMC 1710.

As described above, the FMS circuit 902 has network access. Thus, the FMS circuit 902 can implement a secured (e.g., a mutual transport layer security (TLS) authenticated and protected) tunnel between the FMS circuit 902 and a remote fleet manager. For example, the secured (e.g., mutual TLS authenticated and protected) tunnel is based on the device-unique DICE-based identity of the FMS circuit 902. As described above, the remote fleet manager is responsible for remote secure provisioning of OS images and security key management of the SiP 1702.

FIG. 18 is a block diagram illustrating example communication between the FMS circuit 902 of FIG. 9 and a network in an example platform 1800 where an example SiP 1802 includes an example network interface card (NIC) circuit 1804 integrated external to the SiP 1802. As described above, functionality and usage of the FMS circuit 902 depends on network access. As such, the FMS circuit 902 should have access to a network (e.g., the Internet). Additionally, network access by the FMS circuit 902 should be through a secured network channel so that tenant-specific private keys and certificates can be embedded within the FMS circuit 902.

In the illustrated example of FIG. 18, the SiP 1802 includes an example memory and I/O chiplet 1806. For example, the memory and I/O chiplet 1806 is implemented similarly to the memory and I/O chiplet 910 of FIG. 9. In the example of FIG. 18, the FMS circuit 902 is integrated with the memory and I/O chiplet 1806. Additionally, the memory and I/O chiplet 1806 includes an example I3C interface circuit 1808 and an example OOBMS circuit 1810. In some examples, the NIC circuit 1804 may be implemented by an IPU. Additionally or alternatively, the NIC circuit 1804 can be a standalone NIC on the platform 1800 or integrated within an example BMC 1812 of the platform. In the example of FIG. 18, the NIC circuit 1804 includes a management interface (e.g., an NC-SI) which provides connectivity via an RoT of the platform 1800 or the BMC 1812 (or an LOP).

In the illustrated example of FIG. 18, the FMS circuit 902 can communicate with a network in two manners. First, the FMS circuit 902 can communicate with a network via an example translator CPLD 1814 of the platform 1800. For example, the translator CPLD 1814 translates network packets from a sideband protocol (e.g., an NC-SI protocol) to a network protocol (e.g., an MCTP, an I3C protocol, etc.) and vice-versa. Second, the FMS circuit 902 can communicate with a network via tunneling through the BMC 1812 of the platform 1800. As such, the FMS circuit 902 can utilize the NIC circuit 1804 to connect to a remote fleet manager as described herein.

As illustrated in FIGS 17 and 18, the FMS circuit 902 can communicate with other chiplets and/or dies of a SiP utilizing a die-to-die interconnect standard (e.g., the UCIe standard, the UCIe sideband standard, etc.). As such, the FMS circuit 902 can discover network components to facilitate connection between the FMS circuit 902 and a network (e.g., to communicate with a remote fleet manager). Accordingly, the FMS circuit 902 can implement secure and protected communication with a network (e.g., via TLS, SPDM, TDISP, etc.).

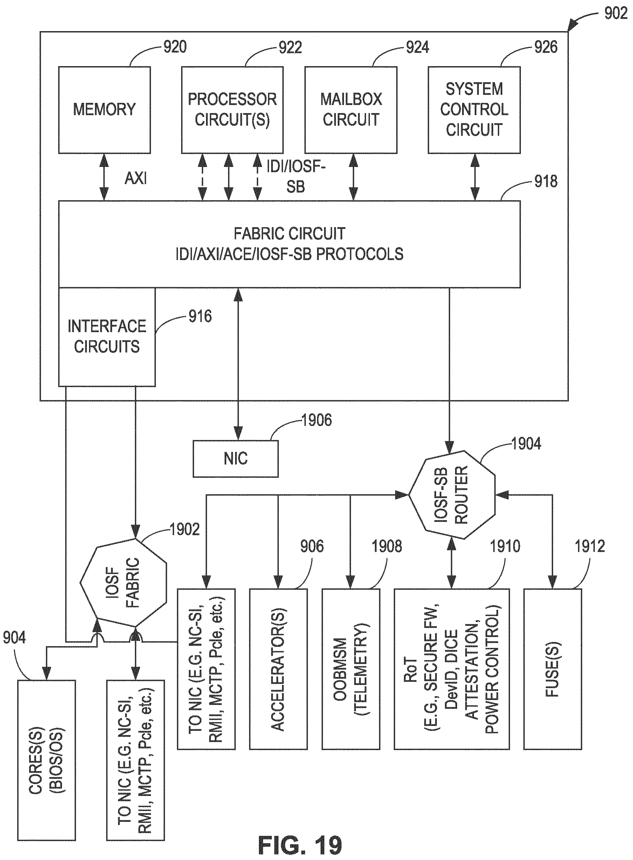

FIG. 19 is a block diagram of an example implementation of the FMS circuit 902 of FIG. 9. For example, FIG. 19, illustrates the components of the FMS circuit 902 of FIG. 9 with respect to other components of a SiP. In the example of FIG. 19, the FMS circuit 902 includes the interface circuit 916, the fabric circuit 918, the memory 920, the one or more processor circuits 922, the mailbox circuit 924, and the system control circuit 926.

In the illustrated example of FIG. 19, the interface circuits 916 offer a standard interface with a host of the FMS circuit 902 which allows the FMS circuit 902 to be integrated into a chiplet from any vendor (e.g., an Intel-based chiplet, an ARM-based chiplet, a RISC-based chiplet, etc.). As such, the interface circuits 916 provide the FMS circuit 902 with the flexibility to be present anywhere in a SiP while maintaining one consistent set of HW-SW interface, programmable processes, and communication messages. As such, the interface circuits 916 advantageously allow the FMS circuit 902 to be integrated into a multi-chiplet, multi-tile, and/or multi-die device.

In the illustrated example of FIG. 19, the interface circuits 916 allow the FMS circuit 902 to be exposed as an RCiEP device directly to the host software of a SiP (e.g., an EPU). For example, one or more core processor circuits of the core chiplet 904 execute host software (e.g., an OS, BIOS, etc.). As such, the host software can access the register space of the FMS circuit 902 and communicate with the FMS circuit 902 through various messaging flows to transfer data, receive error notifications, and/or receive interrupts.

Additionally or alternatively, the interface circuits 916 allow the FMS circuit 902 to be exposed as an RCiEP device through an indirect mechanism. For example, if the FMS circuit 902 is a subcomponent within an address space of a chiplet, then the FMS circuit 902 can expose itself, via the interface circuits 916, as an RCiEP device and the host software of a SiP can discover the FMS circuit 902 through an internal infrastructure of the SiP. For example, the internal infrastructure of the SiP is an example IOSF fabric circuit 1902. As such, the host software can access the register space of the FMS circuit 902 and communicate with the FMS circuit 902 through various messaging flows to transfer data, receive error notifications, and/or receive interrupts.

In the illustrated example of FIG. 19, the fabric circuit 918 allows the FMS circuit 902 to be integrated into any internal fabric (e.g., the IOSF fabric circuit 1902, an ARM advanced microcontroller bus architecture (AMBA) fabric circuit, a RISC fabric circuit, etc. and/or any combination thereof) of a SiP. Additionally, the fabric circuit 918 allows the FMS circuit 902 to communicate with, via an example IOSF-SB router circuit 1904, internal components of a chiplet or the SiP. For example, the fabric circuit 918 allows the FMS circuit 902 to communicate with, via the IOSF-SB router circuit 1904, the accelerator chiplet 906, an example network interface card (NIC) circuit 1906 of the SiP, an example OOBMS circuit 1908 of the SiP, an example RoT circuit 1910 of the SiP, and/or one or more example fuses 1912 of the SiP.

In the illustrated example of FIG. 19, the memory 920 is implemented by SRAM as described above. In the example of FIG. 19, the memory 920 stores boot and runtime code for the FMS circuit 902 and/or other components of the SiP. For example, the memory 920 allows the FMS circuit 902 to be a fully sustained subsystem that can manage its own boot. In some examples, the memory 920 is configured as an in-field programmable ROM device that allows for the FMS circuit 902 to self-contain and update FW code of the FMS circuit 902 without access to flash memory of the SiP and/or another device.

In the illustrated example of FIG. 19, the one or more processor circuits 922 are scalable. In the example of FIG. 19, the one or more processor circuits 922 perform initial boot of the FMS circuit 902, verify firmware of the FMS circuit 902, and communicate with the RoT circuit 1910 for secure device ID provisioning. Additionally, the one or more processor circuits 922 communicate with host EPU software (e.g., the one or more core processor circuits of the core chiplet 904) to expose the FMS circuit 902 as a fleet management device. In the example of FIG. 19, the one or more processor circuits 922 communicate with OOBMS circuit 1908 to download one or more telemetry and/or crash reports and send the one or more reports to one or more of the host EPU software or a remote fleet manager (e.g., running in the cloud). Additionally, the one or more processor circuits 922 perform remote controlled boot and/or reset operations for the SiP and act as the fleet manager client to perform remote fleet management instructions for the SiP.

In the illustrated example of FIG. 19, the mailbox circuit 924 is implemented as one or more of a DOE mailbox requestor or a DOE mailbox responder. Additionally, the system control circuit 926 communicates with RoT circuit 1910 via the interface circuits 916 to facilitate provisioning of the SiP with authorized firmware and a security profile as described above. In the example of FIG. 19, the NIC circuit 1906 communicates with the FMS circuit 902 as described above in FIGS. 17 and/or 18. In some examples, the NIC circuit 1906 is implemented as an IPU.

As described above, the example FMS circuit 902 can be incorporated into any of the disaggregated dies of a multi-chiplet SiP. For example, the FMS circuit 902 can be integrated within an Intel-based an Intel-based chiplet with an Intel-based interconnect, a RISC-based chiplet or an ARM-based chiplet with a proprietary interconnect, and/or any combination of chiplets with different interconnects. In examples disclosed herein, the standard physical interfaces, standard definition of a consistent HW-SW interface, and register definition of the FMS circuit 902, allows for the FMS circuit 902 to be integrated anywhere within a SiP and/or outside of the SiP at platform component level. In some examples, as described above, the FMS circuit 902 is integrated within a chiplet (e.g., in a multi-vendor SiP with one or more interconnects). The key components of the FMS subsystem are shown below.

The FMS circuit 902 of FIGS. 9-19 may be instantiated (e.g., creating an instance of, bring into being for any length of time, materialize, implement, etc.) by programmable circuitry such as a Central Processor Unit (CPU) executing first instructions. Additionally or alternatively, FMS circuit 902 of FIGS. 9-19 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIGS. 9-19 may, thus, be instantiated at the same or different times. Some or all of the circuitry of FIGS. 9-19 may be instantiated, for example, in one or more threads executing concurrently on hardware and/or in series on hardware. Moreover, in some examples, some or all of the circuitry of FIGS. 9-19 may be implemented by microprocessor circuitry executing instructions and/or FPGA circuitry performing operations to implement one or more virtual machines and/or containers.

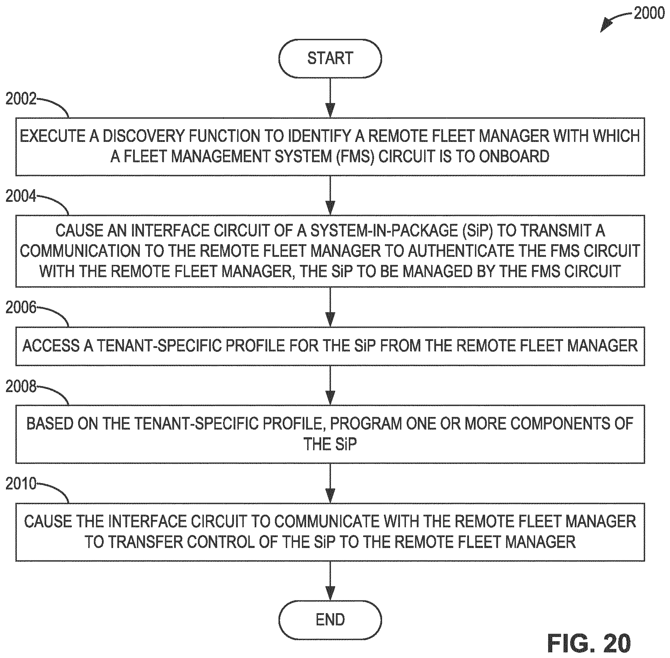

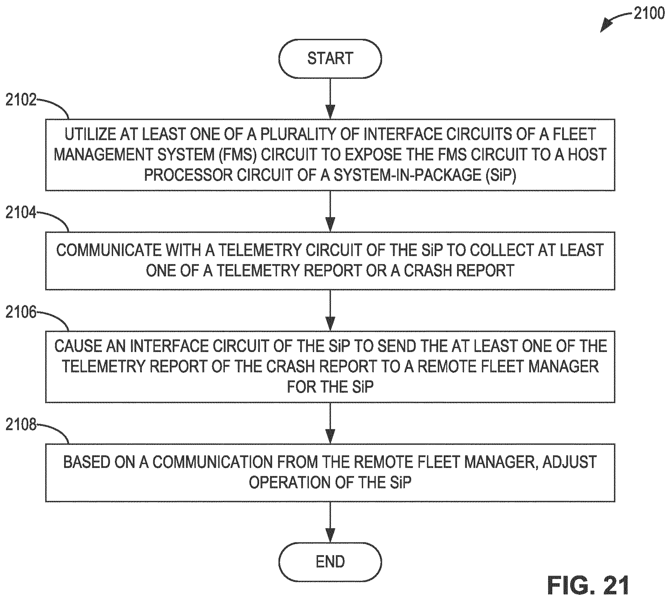

In some examples, the one or more processor circuits 922 is instantiated by programmable circuitry executing fleet management instructions and/or configured to perform operations such as those represented by the flowchart(s) of FIGS. 20 and 21. In some examples, the FMS circuit 902 includes means for managing a computer. For example, the means for managing may be implemented by the one or more processor circuits 922. In some examples, the one or more processor circuits 922 may be instantiated by programmable circuitry such as the example programmable circuitry 2212 of FIG. 22. For instance, the one or more processor circuits 922 may be instantiated by the example microprocessor 2300 of FIG. 23 executing machine-executable instructions such as those implemented by at least blocks 2002, 2004, 2006, 2008, and 2010 of FIG. 20 and/or at least blocks 2102, 2104, 2106, and 2108 of FIG. 21.

In some examples, the one or more processor circuits 922 may be instantiated by hardware logic circuitry, which may be implemented by an ASIC, XPU, or the FPGA circuitry 2400 of FIG. 24 configured and/or structured to perform operations corresponding to the machine-readable instructions. Additionally or alternatively, the one or more processor circuits 922 may be instantiated by any other combination of hardware, software, and/or firmware. For example, the one or more processor circuits 922 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

While an example manner of implementing the FMS circuit 902 of FIG. 9 is illustrated in FIGS. 9-19, one or more of the elements, processes, and/or devices illustrated in FIGS. 9-19 may be combined, divided, re-arranged, omitted, eliminated, and/or implemented in any other way. Further, the example interface circuits 916, the example fabric circuit 918, the example memory 920, the one or more example processor circuits 922, the example mailbox circuit 924, the example system control circuit 926, and/or, more generally, the example FMS circuit 902 of FIGS. 9-19, may be implemented by hardware alone or by hardware in combination with software and/or firmware. Thus, for example, any of the example interface circuits 916, the example fabric circuit 918, the example memory 920, the one or more example processor circuits 922, the example mailbox circuit 924, the example system control circuit 926, and/or, more generally, the example FMS circuit 902, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example FMS circuit 902 of FIGS. 9-19 may include one or more elements, processes, and/or devices in addition to, or instead of, those illustrated in FIGS. 9-19, and/or may include more than one of any or all of the illustrated elements, processes and devices.

Flowchart(s) representative of example machine-readable instructions, which may be executed by programmable circuitry to implement and/or instantiate the FMS circuit 902 of FIGS. 9-19 and/or representative of example operations which may be performed by programmable circuitry to implement and/or instantiate the FMS circuit 902 of FIGS. 9-19, are shown in FIGS. 20 and 21. The machine-readable instructions may be one or more executable programs or portion(s) of one or more executable programs for execution by programmable circuitry such as the programmable circuitry 2212 shown in the example programmable circuitry platform 2200 discussed below in connection with FIG. 22 and/or may be one or more function(s) or portion(s) of functions to be performed by the example programmable circuitry (e.g., an FPGA) discussed below in connection with FIGS. 23 and/or 24. In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer-readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer-readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer-readable storage medium may include one or more mediums. Further, although the example program is described with reference to the flowchart(s) illustrated in FIGS. 6, 7, 8, 20, and/or 21, many other methods of implementing the example TSM circuit 108, the example CDSM circuit 114, the example RoT DCC circuit 120, and/or the example FMS circuit 902 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine-executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine-executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer-readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 6, 7, 8, 20, and/or 21 may be implemented using executable instructions (e.g., computer-readable and/or machine-readable instructions) stored on one or more non-transitory computer-readable and/or machine-readable media. As used herein, the terms non-transitory computer-readable medium, non-transitory computer-readable storage medium, non-transitory machine-readable medium, and/or non-transitory machine-readable storage medium are expressly defined to include any type of computer-readable storage device and/or storage disk and to exclude propagating signals and to exclude transmission media. Examples of such non-transitory computer-readable medium, non-transitory computer-readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer-readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer-readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer-readable instructions, machine-readable instructions, etc., and/or manufactured to execute computer-readable instructions, machine-readable instructions, etc.

FIG. 20 is a flowchart representative of example machine-readable instructions and/or example operations 2000 that may be executed, instantiated, and/or performed by example programmable circuitry to implement the FMS circuit 902 of FIG. 9 to identify and onboard with a remote fleet manager. The example machine-readable instructions and/or the example operations 2000 of FIG. 20 begin at block 2002, at which the FMS circuit 902 executes a discovery function to identify a remote fleet manager with which the FMS circuit 902 is to onboard. For example, the FMS circuit 902 identifies at least one device with which to establish a secure communication session on behalf of a SiP (e.g., an integrated circuit package) where the at least one device is external to the integrated circuit package.

In the illustrated example of FIG. 20, at block 2004, the FMS circuit 902 causes an interface circuit of the SiP to transmit a communication to the remote fleet manager to authenticate the FMS circuit 902 with the remote fleet manager. For example the SiP is to be managed by the FMS circuit 902. In the example of FIG. 20, the communication includes a platform identity for the FMS circuit 902. For example, the platform identity includes security and device credentials for the FMS circuit 902.

In the illustrated example of FIG. 20, at block 2006, the FMS circuit 902 accesses, via the interface circuit, a tenant-specific profile for the SiP from the remote fleet manager. For example, the tenant-specific profile includes a runtime configuration (e.g., OSes, security contexts, SW and/or FW images, etc.) to configure the SiP and a payload including any new credentials required for ongoing operations and communication with the remote fleet manager. As such, after authenticating the FMS circuit 902 with the remote fleet manager, the FMS circuit 902 accesses a configuration profile of SiP from the remote fleet manager.

In the illustrated example of FIG. 20, at block 2008, based on the tenant-specific profile, the FMS circuit 902 programs one or more components (e.g., a BIOS processor circuit, a core chiplet, an accelerator chiplet, a memory and I/O chiplet, a networking chiplet, etc.) of the SiP. At block 2010, the FMS circuit 902 causes the interface circuit to communicate with the remote fleet manager to transfer control of the SiP from the FMS circuit 902 to the remote fleet manager.

FIG. 21 is a flowchart representative of example machine-readable instructions and/or example operations 2100 that may be executed, instantiated, and/or performed by example programmable circuitry to implement the FMS circuit 902 of FIG. 9 to perform fleet management. The example machine-readable instructions and/or the example operations 2100 of FIG. 21 begin at block 2102, at which the FMS circuit 902 utilizes at least one a plurality of interface circuits of the FMS circuit 902 to expose the FMS circuit 902 to a host processor circuit of a SiP. For example, the FMS circuit 902 includes a plurality of interface circuits to enable the FMS circuit 902 to be discovered by any of a plurality of dies of a disaggregated platform.

In the illustrated example of FIG. 21, at block 2104, the FMS circuit 902 communicates with a telemetry circuit of the SiP to collect at least one of a telemetry report or a crash report. For example, a telemetry report includes telemetry data related to one or more components of the SiP. Example telemetry data includes logs, metrics, events, and traces, and can come in many forms, such as environmental data, component status data, component performance data, among others. An example crash report includes information related to the state of a hardware, software, and/or firmware component when the component crashed. For example, a crash report includes data indicative of a crash type, stack traces, software version, performance trends, system crash logs, setup information, and a log of component activity. In some examples, a crash report includes personal information of a user, such as passwords, email addresses, and payment information.

In the illustrated example of FIG. 21, at block 2106, the FMS circuit 902 causes an interface circuit of the SiP to send the at least one of the telemetry report or the crash report to a remote fleet manager for the SiP. At block 2108, based on a communication from the remote fleet manager, the FMS circuit 902 adjusts operation of the SiP. For example, based on a telemetry report, the remote fleet manager may instruct the FMS circuit 902 to adjust one or more operating parameters of at least one component of the SiP to satisfy a service level agreement (SLA) and/or a service level objective (SLO) of a tenant utilizing the SiP. Additionally or alternatively, the FMS circuit 902 performs remote controlled boot and/or reset operations for the SiP based on a communication from the remote fleet manager. As such, the FMS circuit 902 delivers secure fleet management services in a heterogenous edge system based on a configuration profile corresponding to the SiP.

As described above, examples disclosed herein include an architecture and system for a cross-platform root-of-management that anchors hardware primitives with remote manageability and recoverability for operational simplicity and security. Examples disclosed herein include a self-contained silicon and firmware subsystem operating independently and isolated from host resources and services, capable of (1) initiating outbound communication for remote administration, (2) facilitating physical system identity and authenticity challenges, (3) executing localized independent AI driven recovery and operational optimization actions, and (4) providing a consistent management interface across a heterogeneous ecosystem of silicon.

Examples disclosed herein include a processor architecture for an edge fleet management system that is designed for highly disaggregated edge SoCs and/or SiPs. Examples disclosed herein consistently deliver secure fleet management services to highly heterogenous edge systems in a scalable and secure manner as well as in situations where the SoC and/or SiP is in a functional offline mode. Examples disclosed herein include SoC and/or SiP edge architecture details and technological constructs for SoC and/or SiP fleet management.

FIG. 22 is a block diagram of an example programmable circuitry platform 2200 structured to execute and/or instantiate the example machine-readable instructions and/or the example operations of FIGS. 6, 7, 8, 20, and/or 21 to implement the TSM circuit 108 of FIGS. 1-5, the CDSM circuit 114 of FIGS. 1-5, the RoT DCC circuit 120 of FIGS. 1-5, and/or the FMS circuit 902 of FIGS. 9-19. The programmable circuitry platform 2200 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 2200 of the illustrated example includes programmable circuitry 2212. The programmable circuitry 2212 of the illustrated example is hardware. For example, the programmable circuitry 2212 can be implemented by one or more integrated circuits, logic circuits, FPGAs, microprocessors, CPUs, GPUs, DSPs, and/or microcontrollers from any desired family or manufacturer. The programmable circuitry 2212 may be implemented by one or more semiconductor based (e.g., silicon based) devices. In this example, the programmable circuitry 2212 implements the example TSM circuit 108, the example CDSM circuit 114, the example RoT DCC circuit 120, and/or the example FMS circuit 902.

The programmable circuitry 2212 of the illustrated example includes a local memory 2213 (e.g., a cache, registers, etc.). The programmable circuitry 2212 of the illustrated example is in communication with main memory 2214, 2216, which includes a volatile memory 2214 and a non-volatile memory 2216, by a bus 2218. The volatile memory 2214 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 2216 may be implemented by flash memory and/or any other desired type of memory device. Access to the main memory 2214, 2216 of the illustrated example is controlled by a memory controller 2217. In some examples, the memory controller 2217 may be implemented by one or more integrated circuits, logic circuits, microcontrollers from any desired family or manufacturer, or any other type of circuitry to manage the flow of data going to and from the main memory 2214, 2216.

The programmable circuitry platform 2200 of the illustrated example also includes interface circuitry 2220. The interface circuitry 2220 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 2222 are connected to the interface circuitry 2220. The input device(s) 2222 permit(s) a user (e.g., a human user, a machine user, etc.) to enter data and/or commands into the programmable circuitry 2212. The input device(s) 2222 can be implemented by, for example, an audio sensor, a microphone, a camera (still or video), a keyboard, a button, a mouse, a touchscreen, a trackpad, a trackball, an isopoint device, and/or a voice recognition system.

One or more output devices 2224 are also connected to the interface circuitry 2220 of the illustrated example. The output device(s) 2224 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 2220 of the illustrated example, thus, typically includes a graphics driver card, a graphics driver chip, and/or graphics processor circuitry such as a GPU.

The interface circuitry 2220 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 2226. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 2200 of the illustrated example also includes one or more mass storage discs or devices 2228 to store firmware, software, and/or data. Examples of such mass storage discs or devices 2228 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 2232, which may be implemented by the machine-readable instructions of FIGS. 6, 7, 8, 20, and/or 21, may be stored in the mass storage device 2228, in the volatile memory 2214, in the non-volatile memory 2216, and/or on at least one non-transitory computer-readable storage medium such as a CD or DVD which may be removable.

FIG. 23 is a block diagram of an example implementation of the programmable circuitry 2212 of FIG. 22. In this example, the programmable circuitry 2212 of FIG. 22 is implemented by a microprocessor 2300. For example, the microprocessor 2300 may be a general-purpose microprocessor (e.g., general-purpose microprocessor circuitry). The microprocessor 2300 executes some or all of the machine-readable instructions of the flowcharts of FIGS. 6, 7, 8, 20, and/or 21 to effectively instantiate the circuitry of FIGS. 1-5 and/or 9-19 as logic circuits to perform operations corresponding to those machine-readable instructions. In some such examples, the circuitry of FIGS. 1-5 and/or 9-19 is instantiated by the hardware circuits of the microprocessor 2300 in combination with the machine-readable instructions. For example, the microprocessor 2300 may be implemented by multi-core hardware circuitry such as a CPU, a DSP, a GPU, an XPU, etc. Although it may include any number of example cores 2302 (e.g., 1 core), the microprocessor 2300 of this example is a multi-core semiconductor device including N cores. The cores 2302 of the microprocessor 2300 may operate independently or may cooperate to execute machine-readable instructions. For example, machine code corresponding to a firmware program, an embedded software program, or a software program may be executed by one of the cores 2302 or may be executed by multiple ones of the cores 2302 at the same or different times. In some examples, the machine code corresponding to the firmware program, the embedded software program, or the software program is split into threads and executed in parallel by two or more of the cores 2302. The software program may correspond to a portion or all of the machine-readable instructions and/or operations represented by the flowcharts of FIGS. 6, 7, 8, 20, and/or 21.

The cores 2302 may communicate by a first example bus 2304. In some examples, the first bus 2304 may be implemented by a communication bus to effectuate communication associated with one(s) of the cores 2302. For example, the first bus 2304 may be implemented by at least one of an Inter-Integrated Circuit (I2C) bus, a Serial Peripheral Interface (SPI) bus, a PCI bus, or a PCIe bus. Additionally or alternatively, the first bus 2304 may be implemented by any other type of computing or electrical bus. The cores 2302 may obtain data, instructions, and/or signals from one or more external devices by example interface circuitry 2306. The cores 2302 may output data, instructions, and/or signals to the one or more external devices by the interface circuitry 2306. Although the cores 2302 of this example include example local memory 2320 (e.g., Level 1 (L1) cache that may be split into an L1 data cache and an L1 instruction cache), the microprocessor 2300 also includes example shared memory 2310 that may be shared by the cores (e.g., Level 2 (L2 cache)) for high-speed access to data and/or instructions. Data and/or instructions may be transferred (e.g., shared) by writing to and/or reading from the shared memory 2310. The local memory 2320 of each of the cores 2302 and the shared memory 2310 may be part of a hierarchy of storage devices including multiple levels of cache memory and the main memory (e.g., the main memory 2214, 2216 of FIG. 22). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 2302 may be referred to as a CPU, DSP, GPU, etc., or any other type of hardware circuitry. Each core 2302 includes control unit circuitry 2314, arithmetic and logic (AL) circuitry 2316 (sometimes referred to as an ALU), a plurality of registers 2318, the local memory 2320, and a second example bus 2322. Other structures may be present. For example, each core 2302 may include vector unit circuitry, single instruction multiple data (SIMD) unit circuitry, load/store unit (LSU) circuitry, branch/jump unit circuitry, floating-point unit (FPU) circuitry, etc. The control unit circuitry 2314 includes semiconductor-based circuits structured to control (e.g., coordinate) data movement within the corresponding core 2302. The AL circuitry 2316 includes semiconductor-based circuits structured to perform one or more mathematic and/or logic operations on the data within the corresponding core 2302. The AL circuitry 2316 of some examples performs integer-based operations. In other examples, the AL circuitry 2316 also performs floating-point operations. In yet other examples, the AL circuitry 2316 may include first AL circuitry that performs integer-based operations and second AL circuitry that performs floating-point operations. In some examples, the AL circuitry 2316 may be referred to as an Arithmetic Logic Unit (ALU).

The registers 2318 are semiconductor-based structures to store data and/or instructions such as results of one or more of the operations performed by the AL circuitry 2316 of the corresponding core 2302. For example, the registers 2318 may include vector register(s), SIMD register(s), general-purpose register(s), flag register(s), segment register(s), machinespecific register(s), instruction pointer register(s), control register(s), debug register(s), memory management register(s), machine check register(s), etc. The registers 2318 may be arranged in a bank as shown in FIG. 23. Alternatively, the registers 2318 may be organized in any other arrangement, format, or structure, such as by being distributed throughout the core 2302 to shorten access time. The second bus 2322 may be implemented by at least one of an I2C bus, a SPI bus, a PCI bus, or a PCIe bus.

Each core 2302 and/or, more generally, the microprocessor 2300 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 2300 is a semiconductor device fabricated to include many transistors interconnected to implement the structures described above in one or more integrated circuits (ICs) contained in one or more packages.

The microprocessor 2300 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 2300, in the same chip package as the microprocessor 2300 and/or in one or more separate packages from the microprocessor 2300.

FIG. 24 is a block diagram of another example implementation of the programmable circuitry 2212 of FIG. 22. In this example, the programmable circuitry 2212 is implemented by FPGA circuitry 2400. For example, the FPGA circuitry 2400 may be implemented by an FPGA. The FPGA circuitry 2400 can be used, for example, to perform operations that could otherwise be performed by the example microprocessor 2300 of FIG. 23 executing corresponding machine-readable instructions. However, once configured, the FPGA circuitry 2400 instantiates the operations and/or functions corresponding to the machine-readable instructions in hardware and, thus, can often execute the operations/functions faster than they could be performed by a general-purpose microprocessor executing the corresponding software.

More specifically, in contrast to the microprocessor 2300 of FIG. 23 described above (which is a general purpose device that may be programmed to execute some or all of the machine-readable instructions represented by the flowchart(s) of FIGS. 6, 7, 8, 20, and/or 21 but whose interconnections and logic circuitry are fixed once fabricated), the FPGA circuitry 2400 of the example of FIG. 24 includes interconnections and logic circuitry that may be configured, structured, programmed, and/or interconnected in different ways after fabrication to instantiate, for example, some or all of the operations/functions corresponding to the machine-readable instructions represented by the flowchart(s) of FIGS. 6, 7, 8, 20, and/or 21. In particular, the FPGA circuitry 2400 may be thought of as an array of logic gates, interconnections, and switches. The switches can be programmed to change how the logic gates are interconnected by the interconnections, effectively forming one or more dedicated logic circuits (unless and until the FPGA circuitry 2400 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 6, 7, 8, 20, and/or 21. As such, the FPGA circuitry 2400 may be configured and/or structured to effectively instantiate some or all of the operations/functions corresponding to the machine-readable instructions of the flowchart(s) of FIGS. 6, 7, 8, 20, and/or 21 as dedicated logic circuits to perform the operations/functions corresponding to those software instructions in a dedicated manner analogous to an ASIC. Therefore, the FPGA circuitry 2400 may perform the operations/functions corresponding to the some or all of the machine-readable instructions of FIGS. 6, 7, 8, 20, and/or 21 faster than the general-purpose microprocessor can execute the same.

In the example of FIG. 24, the FPGA circuitry 2400 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 2400 of FIG. 24 may access and/or load the binary file to cause the FPGA circuitry 2400 of FIG. 24 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 2400 of FIG. 24 to cause configuration and/or structuring of the FPGA circuitry 2400 of FIG. 24, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 2400 of FIG. 24 may access and/or load the binary file to cause the FPGA circuitry 2400 of FIG. 24 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 2400 of FIG. 24 to cause configuration and/or structuring of the FPGA circuitry 2400 of FIG. 24, or portion(s) thereof.

The FPGA circuitry 2400 of FIG. 24, includes example input/output (I/O) circuitry 2402 to obtain and/or output data to/from example configuration circuitry 2404 and/or external hardware 2406. For example, the configuration circuitry 2404 may be implemented by interface circuitry that may obtain a binary file, which may be implemented by a bit stream, data, and/or machine-readable instructions, to configure the FPGA circuitry 2400, or portion(s) thereof. In some such examples, the configuration circuitry 2404 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 2406 may be implemented by external hardware circuitry. For example, the external hardware 2406 may be implemented by the microprocessor 2300 of FIG. 23.

The FPGA circuitry 2400 also includes an array of example logic gate circuitry 2408, a plurality of example configurable interconnections 2410, and example storage circuitry 2412. The logic gate circuitry 2408 and the configurable interconnections 2410 are configurable to instantiate one or more operations/functions that may correspond to at least some of the machine-readable instructions of FIGS. 6, 7, 8, 20, and/or 21 and/or other desired operations. The logic gate circuitry 2408 shown in FIG. 24 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 2408 to enable configuration of the electrical structures and/or the logic gates to form circuits to perform desired operations/functions. The logic gate circuitry 2408 may include other electrical structures such as look-up tables (LUTs), registers (e.g., flip-flops or latches), multiplexers, etc.

The configurable interconnections 2410 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 2408 to program desired logic circuits.

The storage circuitry 2412 of the illustrated example is structured to store result(s) of the one or more of the operations performed by corresponding logic gates. The storage circuitry 2412 may be implemented by registers or the like. In the illustrated example, the storage circuitry 2412 is distributed amongst the logic gate circuitry 2408 to facilitate access and increase execution speed.

The example FPGA circuitry 2400 of FIG. 24 also includes example dedicated operations circuitry 2414. In this example, the dedicated operations circuitry 2414 includes special purpose circuitry 2416 that may be invoked to implement commonly used functions to avoid the need to program those functions in the field. Examples of such special purpose circuitry 2416 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 2400 may also include example general purpose programmable circuitry 2418 such as an example CPU 2420 and/or an example DSP 2422. Other general purpose programmable circuitry 2418 may additionally or alternatively be present such as a GPU, an XPU, etc., that can be programmed to perform other operations.

Although FIGS. 23 and 24 illustrate two example implementations of the programmable circuitry 2212 of FIG. 22, many other approaches are contemplated. For example, FPGA circuitry may include an on-board CPU, such as one or more of the example CPU 2420 of FIG. 23. Therefore, the programmable circuitry 2212 of FIG. 22 may additionally be implemented by combining at least the example microprocessor 2300 of FIG. 23 and the example FPGA circuitry 2400 of FIG. 24. In some such hybrid examples, one or more cores 2302 of FIG. 23 may execute a first portion of the machine-readable instructions represented by the flowchart(s) of FIGS. 6, 7, 8, 20, and/or 21 to perform first operation(s)/function(s), the FPGA circuitry 2400 of FIG. 24 may be configured and/or structured to perform second operation(s)/function(s) corresponding to a second portion of the machine-readable instructions represented by the flowcharts of FIGS. 6, 7, 8, 20, and/or 21, and/or an ASIC may be configured and/or structured to perform third operation(s)/function(s) corresponding to a third portion of the machine-readable instructions represented by the flowcharts of FIGS. 6, 7, 8, 20, and/or 21.

It should be understood that some or all of the circuitry of FIGS. 1-5 and/or 9-19 may, thus, be instantiated at the same or different times. For example, same and/or different portion(s) of the microprocessor 2300 of FIG. 23 may be programmed to execute portion(s) of machine-readable instructions at the same and/or different times. In some examples, same and/or different portion(s) of the FPGA circuitry 2400 of FIG. 24 may be configured and/or structured to perform operations/functions corresponding to portion(s) of machine-readable instructions at the same and/or different times.

In some examples, some or all of the circuitry of FIGS. 1-5 and/or 9-19 may be instantiated, for example, in one or more threads executing concurrently and/or in series. For example, the microprocessor 2300 of FIG. 23 may execute machine-readable instructions in one or more threads executing concurrently and/or in series. In some examples, the FPGA circuitry 2400 of FIG. 24 may be configured and/or structured to carry out operations/functions concurrently and/or in series. Moreover, in some examples, some or all of the circuitry of FIGS. 1-5 and/or 9-19 may be implemented within one or more virtual machines and/or containers executing on the microprocessor 2300 of FIG. 23.

In some examples, the programmable circuitry 2212 of FIG. 22 may be in one or more packages. For example, the microprocessor 2300 of FIG. 23 and/or the FPGA circuitry 2400 of FIG. 24 may be in one or more packages. In some examples, an XPU may be implemented by the programmable circuitry 2212 of FIG. 22, which may be in one or more packages. For example, the XPU may include a CPU (e.g., the microprocessor 2300 of FIG. 23, the CPU 2420 of FIG. 24, etc.) in one package, a DSP (e.g., the DSP 2422 of FIG. 24) in another package, a GPU in yet another package, and an FPGA (e.g., the FPGA circuitry 2400 of FIG. 24) in still yet another package.

A block diagram illustrating an example software distribution platform 2505 to distribute software such as the example machine-readable instructions 2232 of FIG. 22 to other hardware devices (e.g., hardware devices owned and/or operated by third parties from the owner and/or operator of the software distribution platform) is illustrated in FIG. 25. The example software distribution platform 2505 may be implemented by any computer server, data facility, cloud service, etc., capable of storing and transmitting software to other computing devices. The third parties may be customers of the entity owning and/or operating the software distribution platform 2505. For example, the entity that owns and/or operates the software distribution platform 2505 may be a developer, a seller, and/or a licensor of software such as the example machine-readable instructions 2232 of FIG. 22. The third parties may be consumers, users, retailers, OEMs, etc., who purchase and/or license the software for use and/or re-sale and/or sub-licensing. In the illustrated example, the software distribution platform 2505 includes one or more servers and one or more storage devices. The storage devices store the machine-readable instructions 2232, which may correspond to the example machine-readable instructions of FIGS. 6, 7, 8, 20, and/or 21, as described above. The one or more servers of the example software distribution platform 2505 are in communication with an example network 2510, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third-party payment entity. The servers enable purchasers and/or licensors to download the machine-readable instructions 2232 from the software distribution platform 2505. For example, the software, which may correspond to the example machine-readable instructions of FIGS. 6, 7, 8, 20, and/or 21, may be downloaded to the example programmable circuitry platform 2200, which is to execute the machine-readable instructions 2232 to implement the example TSM circuit 108, the example CDSM circuit 114, the example RoT DCC circuit 120, and/or the example FMS circuit 902. In some examples, one or more servers of the software distribution platform 2505 periodically offer, transmit, and/or force updates to the software (e.g., the example machine-readable instructions 2232 of FIG. 22) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a," "an," "first," "second," etc.) do not exclude a plurality. The term "a" or "an" object, as used herein, refers to one or more of that object. The terms "a" (or "an"), "one or more," and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and/or methods have been disclosed that identify, authenticate and establish one or more keys with chiplets, tiles, and/or dies for confidential computing on multi-chiplet, multi-accelerator system-in-package for AI processors, accelerators, and/or I/O devices. For example, disclosed methods, apparatus, and/or articles of manufacture enable secure workloads and more specifically, AI and transformer models at the edge. Examples disclosed herein deliver security to allow tenants to deploy AI models and data at the edge with AI accelerators.

Accordingly, example systems, apparatus, articles of manufacture, and/or methods have been disclosed that improve security, confidentiality, and/or privacy in edge processor units which allows for AI workloads to be deployed at the edge with confidence that the AI workloads will remain secure. Disclosed systems, apparatus, articles of manufacture, and/or methods improve the operation of a computing device by increasing security in a multi-chiplet, multi-die, and/or multi-tile SiP which mitigates the risk of a computer being compromised. Disclosed systems, apparatus, articles of manufacture, and/or methods are accordingly directed to one or more improvement(s) in the operation of a machine such as a computer or other electronic and/or mechanical device.

Additionally, examples disclosed herein include a processor architecture for delivering AI-based secure, intelligent, and self-healing services for Edge platforms. Examples disclosed herein provide consistent and ubiquitous fleet management across an edge deployment. Additionally, examples disclosed herein secure edge deployments. Example systems, apparatus, articles of manufacture, and/or methods have been disclosed that improve security of, visibility in, and the ability to remotely manage edge deployments. Disclosed systems, apparatus, articles of manufacture, and/or methods improve remote manageability of an edge processor unit. Disclosed systems, apparatus, articles of manufacture, and/or methods are accordingly directed to one or more improvement(s) in the operation of a machine such as a computer or other electronic and/or mechanical device.

Example methods, apparatus, systems, and articles of manufacture for confidential computing security management for a multi-chiplet, multi-accelerator system-in-package are disclosed herein. Further examples and combinations thereof include the following:
Example 1 includes a multi-die System-In-Package (SiP), the SiP comprising a first die including a circuit, and a second die to authenticate the circuit to permit secure communication within the SiP.
Example 2 includes the SiP of example 1, wherein the first die includes a first interface circuit, and the SiP includes a third die including at least one processor circuit to provide at least one trusted execution environment (TEE), and a second interface circuit to send a request to the first interface circuit, the request to initiate a secure communication session between the circuit and the at least one TEE.
Example 3 includes the SiP of example 1, wherein the first die includes a first interface circuit, the second die includes a second interface circuit, and the first interface circuit is to add a header to a request from a third die and forward the request to the second interface circuit, the request to initiate a secure communication session with the circuit.
Example 4 includes the SiP of any of examples 1, 2, or 3, wherein the second die includes a SiP security circuit to create a cryptographic identity for the circuit, and based on a request to initiate a secure communication session with the circuit, provide the cryptographic identity to at least one processor circuit to authenticate the circuit to the at least one processor circuit.
Example 5 includes the SiP of example 1, wherein the first die includes a first interface circuit, the second die includes a second interface circuit, the SiP includes a third die including at least one processor circuit and a third interface circuit, and the first interface circuit is to forward communications between the second interface circuit and the third interface circuit, the communications related to identity and authentication of the circuit.
Example 6 includes the SiP of any of examples 1, 2, 3, or 5, wherein the first die includes a device security management (DSM) circuit, and the second die includes a SiP security circuit to after authentication of the circuit, provide the DSM circuit with a key for a secure communication session between the circuit and at least one processor circuit, delete the key from the SiP security circuit, and maintain a session record for the secure communication session.
Example 7 includes the SiP of any of examples 1, 2, 3, 4, 5, or 6, further including a fleet management system (FMS) circuit including a plurality of interface circuits to enable the FMS circuit to be discovered by any die of the SiP, at least one of the plurality of interface circuits to communicate with at least one die of the SiP, machine-readable instructions, and one or more circuits to be programmed by the machine-readable instructions to deliver secure fleet management services in the SiP based on a configuration profile corresponding to the at least one die.
Example 8 includes a non-transitory computer-readable medium comprising instructions to cause one or more circuits of a first die of a system-in-package (SiP) to authenticate a circuit of a second die of the SiP to permit secure communication within the SiP.
Example 9 includes the non-transitory computer-readable medium of example 8, wherein the second die includes a device security management (DSM) circuit, and the instructions cause at least one of the one or more circuits to mutually authenticate with the DSM circuit.
Example 10 includes the non-transitory computer-readable medium of example 8, wherein the second die includes a device security management (DSM) circuit, and the instructions cause at least one of the one or more circuits to generate an identifier certificate for the DSM circuit and a public, private key pair for the DSM circuit.
Example 11 includes the non-transitory computer-readable medium of example 8, wherein the SiP includes a third die including at least one processor circuit, the second die includes a device security management (DSM) circuit, and the instructions cause at least one of the one or more circuits to, based on receiving a request from the DSM circuit to establish a secure communication session between the at least one processor circuit and the circuit, derive a session key for the secure communication session, the request generated by the at least one processor circuit.
Example 12 includes the non-transitory computer-readable medium of any of examples 8, 9, 10, or 11, wherein the instructions cause at least one of the one or more circuits to collect at least one of a hash of a firmware image of the circuit or a security version number of the circuit.
Example 13 includes the non-transitory computer-readable medium of any of examples 8 or 12, wherein the second die includes a device security management (DSM) circuit, and the instructions cause at least one of the one or more circuits to after authentication of the circuit, provide the DSM circuit with a key for a secure communication session between the circuit and at least one processor circuit, delete the key from the first die, and maintain a session record for the secure communication session.
Example 14 includes the non-transitory computer-readable medium of any of examples 8, 9, 10, 11, 12, or 13, wherein the instructions cause at least one of the one or more circuits to identify at least one device with which to establish a secure communication session on behalf of the SiP, the at least one device external to the SiP, and after authenticating a fleet management system (FMS) of the SiP with the at least one device, access a configuration profile of the FMS from the at least one device, the configuration profile corresponding to a tenant of the SiP.
Example 15 includes a first semiconductor die of a system-in-package (SiP), the first semiconductor die comprising at least one interface circuit, machine-readable instructions, and one or more circuits to be programmed by the machine-readable instructions to authenticate a circuit of a second semiconductor die of the SiP to permit secure communication within the SiP.
Example 16 includes the first semiconductor die of example 15, wherein the second semiconductor die includes a device security management (DSM) circuit, and at least one of the one or more circuits is to mutually authenticate with the DSM circuit.
Example 17 includes the first semiconductor die of example 15, wherein the second semiconductor die includes a device security management (DSM) circuit, and at least one of the one or more circuits is to generate an identifier certificate for the DSM circuit and a public, private key pair for the DSM circuit.
Example 18 includes the first semiconductor die of example 15, wherein the SiP includes a third semiconductor die including at least one processor circuit, the second semiconductor die includes a device security management (DSM) circuit, and at least one of the one or more circuits is to, based on receiving a request from the DSM circuit to establish a secure communication session between at least one processor circuit and the circuit, derive a session key for the secure communication session, the request generated by the at least one processor circuit.
Example 19 includes the first semiconductor die of example 15, wherein the second semiconductor die includes a device security management (DSM) circuit, and at least one of the one or more circuits is to after authentication of the circuit, provide the DSM circuit with a key for a secure communication session between the circuit and at least one processor circuit, delete the key from the first semiconductor die, and maintain a session record for the secure communication session.
Example 20 includes the first semiconductor die of any of examples 15, 16, 17, 18, or 19, wherein at least one of the one or more circuits is to identify at least one device with which to establish a secure communication session on behalf of the SiP, the at least one device external to the SiP, and after authenticating a fleet management system (FMS) of the SiP with the at least one device, access a configuration profile of the FMS from the at least one device, the configuration profile corresponding to a tenant of the SiP.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A multi-die System-In-Package (SiP), the SiP comprising:
a first die including a circuit; and
a second die to authenticate the circuit to permit secure communication within the SiP.

2. The SiP of claim 1, wherein the first die includes a first interface circuit, and the SiP includes a third die including:
at least one processor circuit to provide at least one trusted execution environment (TEE); and
a second interface circuit to send a request to the first interface circuit, the request to initiate a secure communication session between the circuit and the at least one TEE.

3. The SiP of any of claims 1 or 2, wherein the first die includes a first interface circuit, the second die includes a second interface circuit, and the first interface circuit is to add a header to a request from a third die and forward the request to the second interface circuit, the request to initiate a secure communication session with the circuit.

4. The SiP of any of claims 1, 2, or 3, wherein the second die includes a SiP security circuit to:
create a cryptographic identity for the circuit; and
based on a request to initiate a secure communication session with the circuit, provide the cryptographic identity to at least one processor circuit to authenticate the circuit to the at least one processor circuit.

5. The SiP of any of claims 1, 2, 3, or 4, wherein the first die includes a first interface circuit, the second die includes a second interface circuit, the SiP includes a third die including at least one processor circuit and a third interface circuit, and the first interface circuit is to forward communications between the second interface circuit and the third interface circuit, the communications related to identity and authentication of the circuit.

6. The SiP of any of claims 1, 2, 3, 4, or 5, wherein the first die includes a device security management (DSM) circuit, and the second die includes a SiP security circuit to:
after authentication of the circuit, provide the DSM circuit with a key for a secure communication session between the circuit and at least one processor circuit;
delete the key from the SiP security circuit; and
maintain a session record for the secure communication session.

7. The SiP of any of claims 1, 2, 3, 4, 5, or 6, further including a fleet management system (FMS) circuit including:
a plurality of interface circuits to enable the FMS circuit to be discovered by any die of the SiP, at least one of the plurality of interface circuits to communicate with at least one die of the SiP;
machine-readable instructions; and
one or more circuits to be programmed by the machine-readable instructions to deliver secure fleet management services in the SiP based on a configuration profile corresponding to the at least one die.

8. A computer-readable medium comprising instructions to cause one or more circuits of a first die of a system-in-package (SiP) to authenticate a circuit of a second die of the SiP to permit secure communication within the SiP.

9. The computer-readable medium of claim 8, wherein the second die includes a device security management (DSM) circuit, and the instructions cause at least one of the one or more circuits to mutually authenticate with the DSM circuit.

10. The computer-readable medium of any of claims 8 or 9, wherein the second die includes a device security management (DSM) circuit, and the instructions cause at least one of the one or more circuits to generate an identifier certificate for the DSM circuit and a public, private key pair for the DSM circuit.

11. The computer-readable medium of any of claims 8, 9, or 10, wherein the SiP includes a third die including at least one processor circuit, the second die includes a device security management (DSM) circuit, and the instructions cause at least one of the one or more circuits to, based on receiving a request from the DSM circuit to establish a secure communication session between the at least one processor circuit and the circuit, derive a session key for the secure communication session, the request generated by the at least one processor circuit.

12. The computer-readable medium of any of claims 8, 9, 10, or 11, wherein the instructions cause at least one of the one or more circuits to collect at least one of a hash of a firmware image of the circuit or a security version number of the circuit.

13. The computer-readable medium of any of claims 8, 9, 10, 11, or 12, wherein the second die includes a device security management (DSM) circuit, and the instructions cause at least one of the one or more circuits to:
after authentication of the circuit, provide the DSM circuit with a key for a secure communication session between the circuit and at least one processor circuit;
delete the key from the first die; and
maintain a session record for the secure communication session.

14. The computer-readable medium of any of claims 8, 9, 10, 11, 12, or 13, wherein the instructions cause at least one of the one or more circuits to:
identify at least one device with which to establish a secure communication session on behalf of the SiP, the at least one device external to the SiP; and
after authenticating a fleet management system (FMS) of the SiP with the at least one device, access a configuration profile of the FMS from the at least one device, the configuration profile corresponding to a tenant of the SiP.

15. A method to implement the instructions of any of claims 8-14.
